(19) Europäisches Patentamt
European Patent Office
Office européen des brevets

(11) **EP 4 325 595 A1**

(12) **EUROPEAN PATENT APPLICATION**
published in accordance with Art. 153(4) EPC

(43) Date of publication:
**21.02.2024 Bulletin 2024/08**

(51) International Patent Classification (IPC):
**H01M 4/133** (2010.01) **H01M 4/36** (2006.01)
**H01M 4/587** (2010.01)

(21) Application number: **22788026.7**

(52) Cooperative Patent Classification (CPC):
**H01M 4/133; H01M 4/36; H01M 4/587;** Y02E 60/10

(22) Date of filing: **29.03.2022**

(86) International application number:
**PCT/JP2022/015436**

(87) International publication number:
**WO 2022/220101 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.04.2021 JP 2021067424**

(71) Applicant: **Mitsubishi Chemical Corporation**
**Chiyoda-ku**
**Tokyo 100-8251 (JP)**

(72) Inventors:
• **SEKI, Keiichi**
**Tokyo 100-8251 (JP)**
• **HIRAHARA, Satoshi**
**Tokyo 100-8251 (JP)**
• **IWADE, Miki**
**Tokyo 100-8251 (JP)**
• **HASEGAWA, Tatsuya**
**Tokyo 100-8251 (JP)**
• **SHITO, Keiji**
**Tokyo 100-8251 (JP)**

(74) Representative: **Vossius & Partner**
**Patentanwälte Rechtsanwälte mbB**
**Siebertstrasse 3**
**81675 München (DE)**

(54) **COATED CARBON MATERIAL, NEGATIVE ELECTRODE, AND SECONDARY BATTERY**

(57) An object is to provide a coated carbon material that can provide a secondary battery excellent in initial efficiency and high in peel strength, and as a result, to provide a high-performance secondary battery, and is achieved by a coated carbon material for a secondary battery, capable of intercalation/deintercalation a lithium ion, the carbon material having a specified coating film with an organic compound.

EP 4 325 595 A1

FIG. 1

**Description**

TECHNICAL FIELD

The present invention relates to a coated carbon material, a secondary-battery negative-electrode with the coated carbon material, and a secondary battery including the negative electrode.

BACKGROUND ART

In recent years, high-capacity secondary batteries have been increasingly demanded according to miniaturization of electronic equipment. In particular, lithium ion secondary batteries higher in energy density and more excellent in high-current charge and discharge characteristics than nickel/cadmium batteries and nickel/hydrogen batteries have increasingly attracted attention. While increases in capacities of lithium ion secondary batteries have been conventionally widely studied, further increases in performances of lithium ion secondary batteries have been increasingly demanded in recent years, and further increases in capacities, increase in input-output, and increases in lifetimes have been demanded to be achieved.

It is known with respect to lithium ion secondary batteries to use carbon materials such as graphite as negative electrode active materials. In particular, it is known that graphite high in degree of graphitization, when used for negative electrode active materials for lithium ion secondary batteries, provides a capacity close to 372 mAh/g corresponding to the theoretical capacity in lithium intercalation of graphite, and furthermore is also excellent in cost/durability and thus is preferable for negative electrode active materials.

When such carbon materials are used for negative electrode active materials of lithium ion secondary batteries, protective coating films called SEIs (Solid Electrolyte Interfaces) are usually formed on carbon material surfaces by reaction with polymer compounds for use in binding materials or the like, or non-aqueous electrolytic solutions. It is known that SEIs prevent carbon materials and electrolytic solutions from being contacted, inhibit electrolytic solutions from being, for example, decomposed by active carbon materials, and allow chemical stability of negative electrode surfaces to be kept.

However, a problem is that lithium ion secondary batteries with carbon materials as negative electrode active materials are increased in charge and discharge irreversible capacities in the initial cycle due to SEI coating film formation and generation of a gas as a byproduct, resulting in no increases in capacities. Furthermore, a problem is also that stable SEI coating films are formed to thereby cause increases in interface resistances in negative electrodes and deterioration in input-output characteristics of batteries.

In order to solve the above problems, for example, Patent Document 1 discloses the development of a technique including subjecting natural graphite to spheronization treatment (mechanical energy treatment) to thereby produce spheronized natural graphite and furthermore adopting the spheronized natural graphite as nuclear graphite to thereby a surface of the graphite with amorphous carbon.

On the other hand, methods for coating carbon materials as negative electrode active materials with polymers or the like are known as techniques for suppressing excess decomposition of electrolytic solutions. For example, Patent Document 2 discloses a method for providing a coating layer made of an ion-conducting polymer such as polyethylene oxide and/or a water-soluble polymer such as polyvinyl alcohol, on a surface of a carbon material, for the purpose of suppressing decomposition of a non-aqueous electrolytic solution and deposition of its decomposition product on a negative electrode surface to result in improvements in initial charge and discharge efficiency and in charge and discharge cycle characteristics.

Patent Document 3 discloses a method for impregnating spheronized natural graphite enhanced in adhesiveness to a water-soluble polymer by impartation of a surface oxygen functional group, with a water-soluble polymer, for the purpose of suppressing decomposition of a non-aqueous electrolytic solution to result in an improvement in initial charge and discharge efficiency. Patent Document 4 discloses a method for providing a coating film containing, on a surface of a carbon material, a boron atom and a C-O-C bond moiety-containing crosslinking site interposed between the boron atom and such a negative electrode active material, for the purpose of suppressing an increase in internal resistance after a charge and discharge cycle to result in improvements in cycle characteristics.

RELATED ART DOCUMENT

PATENT DOCUMENT

[Patent Document 1] Japanese Unexamined Patent Publication No. H2000-340232

[Patent Document 2] Japanese Unexamined Patent Publication No. H11-120992
[Patent Document 3] Japanese Unexamined Patent Publication No. 2011-198710
[Patent Document 4] Japanese Unexamined Patent Publication No. 2019-87443

## SUMMARY OF THE INVENTION

### PROBLEMS TO BE SOLVED BY THE INVENTION

All the prior arts recited in Patent Documents described above are aimed at enhancements in initial charge and discharge efficiency and cycle characteristics by suppression of decomposition of an electrolytic solution due to a coating film formed on a surface of a carbon material, and are characterized in that an outer surface of a particle made of the carbon material is coated as simply illustrated in FIG. 1 of Patent Document 4.

However, it has been revealed according to studies made by the present inventors that, when, for example, granulated and spheronized graphite made of a plurality of fine graphite particles, or porous artificial graphite or the like obtained by graphitization of coke with Si as a graphitization catalyst is used as a carbon material particle, the initial efficiency and the peel strength are insufficient in the case of only coating of an outer surface of a carbon material particle according to a surface coating procedure conventionally used, and are required to be further improved.

The present invention has been made in view of such background arts, and an object thereof is to provide a coated carbon material that can provide a secondary battery excellent in initial efficiency and high in peel strength, and as a result, to provide a high-performance secondary battery.

### MEANS FOR SOLVING THE PROBLEMS

The present inventors have made intensive studies in order to solve the above problems, and as a result, have found that the above problems can be solved by a coated carbon material where a specified coating film is formed on a carbon material, and a secondary-battery negative-electrode and a secondary battery, with the coated carbon material, and have completed the present invention.

The reason why the coated carbon material according to the present invention exerts the above effects is considered as follows.

In other words, although no attention has been conventionally attracted, it has been important for a coated carbon material particle having many intra-particle pores to allow decomposition of an electrolytic solution, occurring in inner walls of such intra-particle pores, to be suppressed, and it has been considered that a specified coating film including an organic compound can be formed on such inner walls of intra-particle pores to thereby remarkably exert the effect of satisfaction of both an enhancement in initial efficiency provided by suppression of side reaction with an electrolytic solution and high peel strength.

In other words, the gist of the present invention is as follows.

[1] A coated carbon material where a carbon material is coated with an organic compound, wherein a ratio Tol-SA/$N_2$-SA of a BET specific surface area Tol-SA by toluene adsorption to a BET specific surface area $N_2$-SA by nitrogen adsorption is 0.70 to 0.95.

[2] A coated carbon material where a carbon material is coated with an organic compound, wherein a coating rate of a basal plane of the carbon material is 30% to 90%.

[3] A coated carbon material where a carbon material is coated with an organic compound, wherein a ratio, basal plane specific surface area/Tol-SA, of a basal plane specific surface area by toluene adsorption to a BET specific surface area Tol-SA by toluene adsorption is 0.15 to 0.65.

[4] A coated carbon material where a carbon material is coated with an organic compound, wherein a mass reduction rate from 200°C to 700°C, as measured by TG-DTA, is 0.10% by mass to 0.42% by mass.

[5] The coated carbon material according to any of [1] to [4], wherein the carbon material is graphite.

[6] The coated carbon material according to any of [1] to [5], wherein the carbon material contains pores.

[7] The coated carbon material according to any of [1] to [6], wherein the organic compound comprises a polyvinyl alcohol resin-derived compound.

[8] The coated carbon material according to [7], wherein the polyvinyl alcohol resin-derived compound contains a reactive substituent.

[9] The coated carbon material according to [8], wherein the reactive substituent contains at least one substituent selected from a hydroxyl group, a carboxyl group, a carbonyl group, an acetyl group, a (meth)acrylic group, an epoxy group, a vinyl group, a hydrolyzable silyl group, a silanol group, and a hydrosilyl group.

[10] A negative electrode comprising a current collector and an active material layer formed on the current collector, wherein the active material layer comprises the coated carbon material according to any of [1] to [9].

[11] A secondary battery comprising a positive electrode, a negative electrode, and an electrolyte, wherein the negative electrode is the negative electrode according to [10].

EFFECTS OF THE INVENTION

The coated carbon material of the present invention can be used in a negative electrode active material for a secondary battery to thereby provide a secondary battery excellent in initial efficiency and high in peel strength.

BRIEF DESCRIPTION OF DRAWINGS

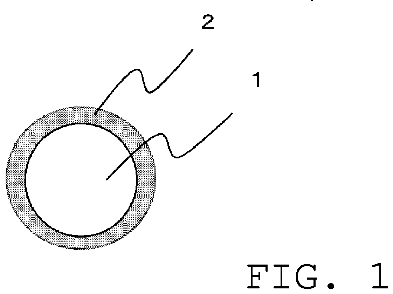

FIG. 1 is a schematic view representing a coated carbon material disclosed in Patent Document 4, in which an outer surface of a particle made of a carbon material is coated.
FIG. 2 is a schematic view representing a coated state of a coated carbon material.

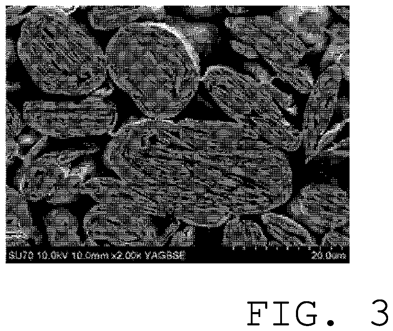

FIG. 3 is a cross-section SEM image of graphite used in Examples (alternative photograph of the drawing).

MODE FOR CARRYING OUT THE INVENTION

Hereinafter, the content of the present invention will be described in detail. It is noted that the description of components of the invention, described below, corresponds to one example (representative example) of aspects of the present invention and the present invention is not specified by such aspects without departing the gist thereof.

A numerical value range herein expressed by use of "to" means a range including respectively numerical values described before and after "to" as a lower limit value and an upper limit value, and the "A to B" means A or more and B or less.

One embodiment of the coated carbon material of the present invention is a coated carbon material where a carbon material is coated with an organic compound, wherein the ratio Tol-SA/$N_2$-SA (hereinafter, also referred to as "BET specific surface area ratio".) of the BET specific surface area Tol-SA by toluene adsorption to the BET specific surface area $N_2$-SA by nitrogen adsorption is 0.70 to 0.95. When the BET specific surface area ratio is within the above range, a secondary battery with the coated carbon material of the present embodiment is a secondary battery excellent in initial efficiency.

The BET specific surface area ratio is preferably 0.70 or more, and preferably 0.95 or less, more preferably 0.85 or less. Adjustment of the BET specific surface area ratio within the above range can be achieved by, for example, appropriately adjusting the ratio of the amount of coating with an organic substance, relative to the $N_2$-SA of the carbon material.

The BET specific surface area is defined as Tol-SA which is a value determined by preliminarily drying a coated carbon material specimen under reduced pressure at 100°C for 30 minutes under a nitrogen stream and then performing linear regression of a range of $P/P_0 = 0.05$ to 0.18 according to a toluene adsorption BET method with toluene gas at 25°C, with an apparatus for measurement of differential heat of adsorption (for example, thermal measurement method surface analyzer CSA-25G and multimicro calorimeter MMC-5111 manufactured by Tokyo Riko Co., Ltd.). A value obtained by measurement according to a nitrogen adsorption BET one-point method with nitrogen gas at a liquid nitrogen temperature, with a fully automatic specific surface area measurement apparatus (for example, Macsorb HM Model-1210 manufactured by MOUNTECH Co., Ltd.), is defined as $N_2$-SA.

Another embodiment of coated carbon material is a coated carbon material where a carbon material is coated with an organic compound, wherein the coating rate of a basal plane of the carbon material is 30% to 90%. When the coating rate of a basal plane of the carbon material is within the above range, a secondary battery with the coated carbon material of the present embodiment is a secondary battery excellent in initial efficiency. The basal plane refers to a flat plane where benzene is structure fused, of the carbon material, and is a carbon material surface having a heat of adsorption of toluene gas of 67 kJ/mol or more and a high affinity with toluene, as described below.

The coating rate of the basal plane is preferably 30% or more, more preferably 50% or more, further preferably 60% or more. When the coating rate of the basal plane is equal to or more than the above lower limit, side reaction of an electrolytic solution on the basal plane is suppressed and the initial efficiency is significantly enhanced, in use as a negative electrode material of a non-aqueous secondary battery. The coating rate is preferably 90% or less, more preferably 80% or less. When the coating rate of the basal plane is equal to or less than the above upper limit, adhesion force with a binding material resin for negative electrode sheet formation, such as CMC or SBR, is sufficiently ensured and thus peeling of a negative electrode sheet can be suppressed. The electron conductivity of a negative electrode sheet is also ensured. Adjustment of the coating rate of the basal plane within the above range can be achieved by, for example, appropriately adjusting the ratio of the amount of coating with an organic substance, relative to the $N_2$-SA of

the carbon material.

The method for measuring the coating rate of the basal plane can be made by measurement according to the following procedure with an apparatus for measurement of differential heat of adsorption.

First, the carbon material before coating with an organic compound is subjected to simultaneous measurement of an adsorption isotherm and a heat of adsorption with a toluene gas. A carbon material surface having a heat of adsorption of 67 kJ/mol or more and a high affinity with toluene is defined as the basal plane, and the basal plane specific surface area of the carbon material is determined from a cross-sectional area of a toluene molecule, of $5.5 \times 10^{-19}$ m2, and the amount of toluene adsorption to the basal plane.

Next, the coated carbon material coated with an organic compound is also again subjected to simultaneous measurement of an adsorption isotherm and a heat of adsorption with a toluene gas, and the basal plane specific surface area is determined from the amount of toluene adsorption to the basal plane having a heat of adsorption of 67 kJ/mol or more. When a portion of the basal plane of the carbon material as a raw material is coated with an organic compound, the affinity with toluene is decreased to result in a lower heat of adsorption, and thus the coated carbon material coated with an organic compound is decreased in basal plane specific surface area as compared with the carbon material as a raw material.

The coating rate of the basal plane is calculated by the following expression (A).

```
Expression (A)

Coating rate of basal plane (%) = [1 - (Basal plane

specific surface area of coated carbon material)/(Basal

plane specific surface area of carbon material as raw

material)] × 100
```

Another embodiment of the coated carbon material is a coated carbon material where a carbon material is coated with an organic compound, wherein the ratio, basal plane specific surface area/Tol-SA, of the basal plane specific surface area by toluene adsorption to the BET specific surface area Tol-SA by toluene adsorption (hereinafter, also referred to as "basal plane specific surface area ratio".) is 0.15 to 0.65. When the basal plane specific surface area ratio is within the above range, a secondary battery with the coated carbon material of the present embodiment is a secondary battery excellent in initial efficiency.

The basal plane specific surface area ratio is preferably 0.15 or more, more preferably 0.20, and preferably 0.65 or less, more preferably 0.60 or less. Adjustment of the basal plane specific surface area ratio within the above range may be made so that the basal plane can be partially coated, and can be achieved by, for example, appropriately adjusting the ratio of the amount of coating with an organic substance, relative to the carbon material.

The basal plane specific surface area and the Tol-SA can be measured by the above methods.

Another embodiment of the coated carbon material is a coated carbon material where a carbon material is coated with an organic compound, wherein the mass reduction rate from 200°C to 700°C, as measured by TG-DTA, is 0.10% by mass to 0.42% by mass. When the mass reduction rate is within the above range, a secondary battery with the coated carbon material of the present embodiment is a secondary battery excellent in initial efficiency.

The mass reduction rate is preferably 0.10% by mass or more, more preferably 0.20% by mass or more, and preferably 0.42% by mass or less, more preferably 0.35% by mass or less. Adjustment of the mass reduction rate within the above range can be achieved by, for example, appropriately adjusting the ratio of the amount of coating with an organic substance, relative to the $N_2$-SA of the carbon material.

The mass reduction rate can be measured with a differential thermogravimetric apparatus STA300 manufactured by Hitachi High-Tech Science Corporation, by the following procedure.

Specifically, about 50 mg of the coated carbon material is precisely weighed and placed in a specimen container made of alumina, and heated from 25°C to 700°C at a rate of temperature rise of 10°C/min in a nitrogen atmosphere, and the amount of mass reduction according to this, between 200°C and 700°C, is defined as the amount of coating of the coated carbon material.

The mass reduction rate is calculated by the following expression (B).

Expression (B)

$$\text{Mass reduction rate (\%)} = [\text{Amount of mass reduction of coated carbon material/Mass of coated carbon material before heating}] \times 100$$

Examples of the carbon material include graphite, amorphous carbon, or a carbonaceous substance low in degree of graphitization. In particular, graphite is preferable because of being commercially easily available, having a high charge and discharge capacity of 372 mAh/g in theory, and furthermore having a large improvement effect of charge and discharge characteristics at a high current density as compared with the case of use of other negative electrode active material. The graphite is preferably one having small amounts of impurities, and can be, if necessary, subjected to any known purification treatment, and then used. Examples of the type of the graphite include natural graphite or artificial graphite, and natural graphite is more preferable.

One coated with a carbonaceous substance, for example, amorphous carbon or a graphitized product may also be used. In the present embodiment, such one can be used singly, or in combination of two or more kinds thereof.

Examples of the artificial graphite include one obtained by firing and graphitizing an organic substance such as coal-tar pitch, a coal-based heavy oil, an atmospheric residue, a petroleum-based heavy oil, aromatic hydrocarbon, a nitrogen-containing cyclic compound, a sulfur-containing cyclic compound, polyphenylene, polyvinyl chloride, polyvinyl alcohol, polyacrylonitrile, polyvinyl butyral, a natural polymer, polyphenylene sulfide, polyphenylene oxide, a furfuryl alcohol resin, a phenol-formaldehyde resin, or an imide resin.

The firing temperature can be within the range of 2500°C or more and 3200°C or less, and a silicon-containing compound, a boron-containing compound, or the like can also be used as a graphitization catalyst during the firing.

Examples of the natural graphite include flaky graphite increased in purity, and graphite subjected to spheronization treatment. In particular, natural graphite subjected to spheronization treatment is further preferable from the viewpoints of particle packing ability and charge and discharge loading characteristics.

The apparatus for use in the spheronization treatment can be, for example, an apparatus that repeatedly applies to a particle, mainly an impact force, and mechanical action such as compression, friction, or a shear force, including interaction of graphite carbonaceous substance particles.

Specifically, an apparatus is preferable which has a rotor with many blades disposed in a casing and which applies mechanical action such as impact compression, friction, or a shear force to the carbon material introduced into the interior, due to high-speed rotation of the rotor, to thereby perform surface treatment. One is preferable which has a mechanism that repeatedly applies such mechanical action by circulation of the graphite.

Examples of a preferable apparatus that applies such mechanical action to the graphite material include a hybridization system (manufactured by NARA MACHINERY CO., LTD.), Criptron (manufactured by EARTHTECHNICA Co., Ltd.), a CF mill (manufactured by UBE Corporation), a Mechanofusion system (manufactured by Hosokawa Micron), or a theta composer (manufactured by TOKUJU Co., LTD.). In particular, a hybridization system manufactured by NARA MACHINERY CO., LTD. is preferable.

In the case of treatment with the apparatus, for example, the peripheral velocity of the rotor rotated is preferably 30 to 100 m/sec, more preferably 40 to 100 m/sec, particularly preferably 50 to 100 m/sec. While the treatment for application of such mechanical action to the graphite material can also be made by simply allowing the graphite to pass through, treatment where the graphite is circulated or retained in the apparatus for 30 seconds or more is preferable, and treatment where the graphite is circulated or retained in the apparatus for 1 minute or more is more preferable.

Natural graphite subjected to spheronization treatment, which is subjected to isotropic pressurization treatment, can also be used as the carbon material.

The carbon material as a raw material can be isotropically pressurized for inner void compression, resulting in an increase in density of the carbon material ground after pressurization treatment and enhancements in high-rate charge characteristics. Furthermore, the carbon material can be efficiently coated without excess absorption of the organic compound of the coating material to inner pores of the carbon material as a raw material. Such isotropic pressurization can allow any particle to be hardly flattened and to retain its spherical shape, and can also prevent deterioration in fluidity of slurry formed.

The pressurizing tool here used can be, for example, a roll compactor, a roll press, a pricket machine, a cold isotropic pressure device (CIP), a uniaxial molding machine, or a tablet machine. Among these pressurizing tools, a cold isotropic pressure device is preferable because of decreasing inner pores with a particle shape being maintained.

<Physical properties of carbon material>

The following describes preferable characteristics of the carbon material serving as a raw material in a case where the coated carbon material has a coating film including an organic compound in the carbon material. Hereinafter, the carbon material of the present embodiment may be appropriately designated, but the scope of the present invention is not limited thereto at all.

· Volume-based average particle diameter (average particle diameter d50)

The volume-based average particle diameter (also designated as "average particle diameter d50") of the carbon material of the present embodiment is preferably 1 um or more, more preferably 5 um or more, further preferably 10 um or more, particularly preferably 15 um or more, most preferably 16.5 $\mu$m or more. The average particle diameter d50 is preferably 50 $\mu$m or less, more preferably 40 um or less, further preferably 35 $\mu$m or less, particularly preferably 30 $\mu$m or less, most preferably 25 $\mu$m or less. When the average particle diameter d50 is in the above range, a secondary battery obtained with the carbon material is suppressed in an increase in irreversible capacity and loss in initial battery capacity, and the occurrence of process failure such as streak in slurry coating, deterioration in high-current-density charge and discharge characteristics, and deterioration in low-temperature input-output characteristics are suppressed.
The average particle diameter d50 is herein defined as one determined by suspending 0.01 g of the carbon material in 10 mL of an aqueous 0.2% by mass solution of polyoxyethylene sorbitan monolaurate (examples include Tween 20 (registered trademark)) as a surfactant to provide a measurement sample, introducing the measurement sample to a commercially available laser diffraction/scattering particle size distribution measurement apparatus (for example, LA-920 manufactured by HORIBA Ltd.), irradiating the measurement sample with 28 kHz ultrasonic wave at an output of 60 W for 1 minute, and then measuring the volume-based median diameter with the measurement apparatus.

· Degree of circularity

The degree of circularity of the carbon material of the present embodiment is 0.88 or more, preferably 0.90 or more, more preferably 0.91 or more. The degree of circularity is preferably 1 or less, more preferably 0.98 or less, further preferably 0.97 or less. When the degree of circularity is within the above range, deterioration in high-current-density charge and discharge characteristics of a secondary battery tends to be able to be suppressed. The degree of circularity is defined by the following expression, and a degree of circularity of 1 means a theoretically true sphere.

$$\text{Degree of circularity = (Boundary length of corresponding circle having same area as in particle projection shape)/(Actual boundary length of particle projection shape)}$$

The value of the degree of circularity, here adopted, can be, for example, a value determined by using a flow type particle image analyzer (for example, FPIA manufactured by Sysmex Industrial), dispersing about 0.2 g of a specimen (carbon material) in an aqueous 0.2% by mass solution (about 50 mL) of polyoxyethylene sorbitan monolaurate as a surfactant, irradiating the dispersion liquid with 28 kHz ultrasonic wave at an output of 60 W for 1 minute, and then indicating the detection range to 0.6 to 400 $\mu$m and subjecting a particle having a particle diameter in the range from 1.5 to 40 $\mu$m, to measurement.
The method for enhancing the degree of circularity is not particularly limited, but one involving spherionization by application of spheronization treatment is preferable because the shape of an inter-particle void in a negative electrode formed is tailored. Examples of the spheronization treatment include a method for mechanical approximation to a spherical shape by application of a shear force and/or a compression force, and a mechanical/physical treatment method for granulating a plurality of carbon material fine particles by an attachment force of a binder or the particles themselves.

· Tap density

The tap density of the carbon material of the present embodiment is preferably 0.7 g/cm$^3$ or more, more preferably 0.8 g/cm$^3$ or more, further preferably 0.85 g/cm$^3$ or more, particularly preferably 0.9 g/cm$^3$ or more, most preferably 0.95 g/cm$^3$ or more, preferably 1.3 g/cm$^3$ or less, more preferably 1.2 g/cm$^3$ or less, further preferably 1.1

g/cm$^3$ or less.

When the tap density is within the above range, processability, for example, streak is improved during electrode sheet production and high-speed charge and discharge characteristics are excellent. The carbon density in a negative electrode coating film is hardly increased and thus rollability is also favorable, and a high-density negative electrode sheet tends to be easily formed.

The tap density is defined as the bulk density determined from the volume and the mass of a specimen, which are measured with a powder density measurement tool by dropping the carbon material of the present embodiment through a sieve with an aperture of 300 um onto a cylindrical tap cell having a diameter of 1.6 cm and a volume of 20 cm$^3$ to fill the cell and then performing tapping of a stroke length of 10 mm 1000 times.

· X-ray parameter

The value of d (interlayer distance) of the lattice place (002 plane) of the carbon material of the present embodiment, determined by X-ray diffraction according to the Gakushin method, is preferably 0.335 nm or more and less than 0.340 nm. The value of d is here more preferably 0.339 nm or less, further preferably 0.337 nm or less. When the value of d002 is within the above range, crystallinity of graphite is high, resulting in tendency to suppress an increase in initial irreversible capacity. A value of 0.335 nm corresponds to the theoretical value of graphite.

The crystallite size (Lc) of the carbon material, determined by X-ray diffraction according to the Gakushin method, is preferably within the range of 1.5 nm or more, more preferably 3.0 nm or more. When the size is within the above range, a particle not too low in crystallinity is obtained and the reversible capacity is hardly decreased in the case of a secondary battery formed. Herein, the lower limit of Lc corresponds to the theoretical value of graphite.

· Ash content

The ash content included in the carbon material of the present embodiment is preferably 1% by mass or less, more preferably 0.5% by mass or less, further preferably 0.1% by mass or less based on the total mass of the carbon material. The lower limit of the ash content is preferably 1 ppm or more.

When the ash content is within the above range, degradation in battery performance due to reaction of the carbon material and an electrolytic solution during charge and discharge can be suppressed to a negligible level in the case of a secondary battery formed. In addition, excessive amounts of time and energy, and facilities for contamination prevention are not needed for production of the carbon material, and thus an increase in cost is also suppressed.

BET specific surface area (N$_2$-SA) by nitrogen adsorption

The specific surface area (N$_2$-SA) of the carbon material of the present embodiment, measured by a BET method with nitrogen gas, is preferably 3 m$^2$/g or more, more preferably 4 m$^2$/g or more, further preferably 4.5 m$^2$/g or more, particularly preferably 5.0 m$^2$/g or more, most preferably 6.0 m$^2$/g or more, and preferably 13 m$^2$/g or less, more preferably 12 m$^2$/g or less, further preferably 11 m$^2$/g or less, particularly preferably 10 m$^2$/g or less, most preferably 9 m$^2$/g or less.

When the specific surface area is within the above range, a site for passage of Li can be sufficiently ensured, and thus high-speed charge and discharge characteristics are excellent and the activity of an active material to an electrolytic solution can also be properly suppressed to thereby lead to no increase in initial irreversible capacity, resulting in a tendency to enable a high-capacity battery to be produced.

When a negative electrode is formed with the carbon material, an increase in reactivity thereof with an electrolytic solution can be suppressed and gas generation can be suppressed, and thus a preferable non-aqueous secondary battery can be provided.

The BET specific surface area by nitrogen adsorption is defined as the value obtained by subjecting a carbon material specimen preliminarily dried under reduced pressure at 100°C for 30 minutes under a nitrogen stream and then cooled to a liquid nitrogen temperature, to measurement with a surface area meter (for example, Macsorb HM Model-1210 manufactured by MOUNTECH Co., Ltd.), according to a nitrogen adsorption BET one-point method with a nitrogen gas.

· Pore volume in range from 10 nm to 1500 nm

The carbon material of the present embodiment preferably has pores.

The pore volume in the range from 10 nm to 1500 nm in the carbon material of the present embodiment is a value measured by a mercury intrusion method (mercury porosimetry), and is preferably 0.05 mL/g or more, more preferably 0.07 mL/g or more, further preferably 0.1 mL/g or more, and preferably 0.3 mL/g or less, more preferably 0.28 mL/g or less, further preferably 0.25 mL/g or less.

When the pore volume in the range from 10 nm to 1500 nm is within the above range, a void into which an electrolytic solution can penetrate is hardly decreased and a tendency to cause too late insertion/extraction of a lithium ion in rapid charge and discharge and accordingly deposition of lithium metal and deterioration in cycle characteristics can be more avoided. Furthermore, a binding material is hardly absorbed in such a void in electrode sheet production, and accordingly a tendency to cause deterioration in electrode sheet strength and deterioration in initial efficiency can also be more avoided.

The total pore volume in the carbon material of the present embodiment is preferably 0.1 mL/g or more, more preferably 0.2 mL/g or more, further preferably 0.25 mL/g or more, particularly preferably 0.5 mL/g or more. The total pore volume is preferably 10 mL/g or less, more preferably 5 mL/g or less, further preferably 2 mL/g or less, particularly preferably 1 mL/g or less.

When the total pore volume is within the above range, the amount of a binding material in electrode sheet formation is not required to be excess, and the dispersion effect of a thickener and/or a binding material in electrode sheet formation is also easily obtained.

The average pore size of the carbon material of the present embodiment is preferably 0.03 $\mu$m or more, more preferably 0.05 $\mu$m or more, further preferably 0.1 um or more, particularly preferably 0.3 $\mu$m or more. The average pore size is preferably 20.0 um or less, more preferably 10.0 $\mu$m or less, further preferably 5.0 um or less.

When the average pore size is within the above range, the amount of a binding material in electrode sheet formation is not required to be excess, and deterioration in high-current-density charge and discharge characteristics of a battery tends to be able to be avoided.

A mercury porosimeter (AutoPore 9520: manufactured by Micromeritics Instrument Corporation) can be used as the apparatus for mercury porosimetry. A specimen (carbon material) is weighed so as to be in an amount of about 0.2 g, enclosed in a cell for a powder, and subjected to pre-treatment by degassing under vacuum (50 pmHg or less) at 25°C for 10 minutes.

Subsequently, the pressure was reduced to 4 psia (about 28 kPa) and mercury is introduced to the cell, and the pressure is increased stepwise from 4 psia (about 28 kPa) to 40000 psia (about 280 MPa) and then reduced to 25 psia (about 170 kPa).

The number of steps during pressure increase is 80 points or more, and the amount of mercury intrusion is measured after an equilibrium time of 10 seconds in each step. A pore distribution is calculated based on the mercury intrusion curve thus obtained, by use of the Washburn's equation.

The calculation is made under the assumption that the surface tension ($\gamma$) and the contact angle ($\psi$) of mercury are respectively 485 dyne/cm and 140°. The average pore size is defined as the pore size at which the cumulative pore volume corresponds to 50%. The average pore size of the carbon material is determined under the assumption that an internal pore of the carbon material and a void between the carbon material and the carbon material are included.

· True density

The true density of the carbon material of the present embodiment is preferably 1.9 g/cm$^3$ or more, more preferably 2 g/cm$^3$ or more, further preferably 2.1 g/cm$^3$ or more, particularly preferably 2.2 g/cm$^3$ or more, and the upper limit thereof is 2.26 g/cm$^3$. The upper limit is the theoretical value of graphite. When the true density is within the above range, crystallinity of carbon is not too low, and an increase in initial irreversible capacity in the case of a secondary battery formed tends to be able to be suppressed.

· Aspect ratio

The aspect ratio of the carbon material of the present embodiment in the form of a powder is 1 or more in theory, and is preferably 1.1 or more, more preferably 1.2 or more because a cost is taken for allowing the carbon material to be excessively close to a true sphere. The aspect ratio is preferably 10 or less, more preferably 8 or less, further preferably 5 or less.

When the aspect ratio is within the above range, there are tendencies to hardly cause streak with a slurry (negative electrode-forming material) including the carbon material in electrode sheet formation, to obtain a uniform coating surface, and to avoid deterioration in high-current-density charge and discharge characteristics of a secondary battery.

The aspect ratio is expressed by A/B under the assumption that, when a carbon material particle is three-dimensionally observed, the longest diameter and the shortest diameter perpendicular thereto are respectively defined as the diameter A and the diameter B. The carbon material particle is observed with a scanning electron microscope that can perform magnification observation. Any 50 such carbon material particles fixed to an end of a metal having a thickness of 50 microns or less are selected, the stage to which such each specimen is fixed is rotated and inclined to measure A and B, and the average value with respect to A/B is determined.

· Maximum particle diameter dmax

The maximum particle diameter dmax of the carbon material of the present embodiment is preferably 200 $\mu$m or less, more preferably 150 um or less, further preferably 120 $\mu$m or less, particularly preferably 100 $\mu$m or less, most preferably 80 $\mu$m or less. When the dmax is within the above range, the occurrence of any process failure such as streak tends to be able to be suppressed.
The maximum particle diameter is defined as the value of the largest particle diameter in particle measurement, in a particle size distribution obtained in measurement of the average particle diameter d50.

· Raman R value

The Raman R value of the carbon material of the present embodiment is preferably 0.1 or more, more preferably 0.15 or more, further preferably 0.2 or more. The Raman R value is preferably 0.6 or less, more preferably 0.5 or less, further preferably 0.4 or less.
The Raman R value is defined as one calculated as the intensity ratio ($I_B/I_A$) determined in measurement of the intensity $I_A$ of the peak $P_A$ around 1580 cm$^{-1}$ and the intensity $I_B$ of the peak $P_B$ around 1360 cm$^{-1}$ in a Raman spectrum determined by Raman spectroscopy. Herein, the "around 1580 cm$^{-1}$" refers to the range from 1580 to 1620 cm$^{-1}$ and the "around 1360 cm$^{-1}$" refers to the range from 1350 to 1370 cm$^{-1}$.
When the Raman R value is within the above range, there are tendencies to hardly increase crystallinity of a carbon material particle surface, to hardly orient any crystal in a parallel direction to a negative electrode sheet in the case of an increase in density, and to avoid deterioration in load characteristics. There are further tendencies to hardly disturb any crystal on the particle surface, to suppress an increase in reactivity of a negative electrode with an electrolytic solution, and enable deterioration in charge and discharge efficiency of a secondary battery and increase of gas generation to be avoided.
The Raman spectrum can be measured with a Raman spectrometer. Specifically, a particle to be measured is naturally dropped into a measurement cell to thereby pack a specimen, and measurement is performed while the interior of the measurement cell is irradiated with argon ion laser and the measurement cell is rotated in a plane perpendicular to such laser light. Measurement conditions are as follows.

Wavelength of argon ion laser light: 514.5 nm
Laser power on specimen: 25 mW
Resolution: 4 cm$^{-1}$
Measurement range: 1100 cm$^{-1}$ to 1730 cm$^{-1}$; peak intensity measurement, peak half-value width: background treatment, smoothing treatment (convolution by simple average, 5 points)

· Amount of DBP oil absorption

The amount of DBP (dibutyl phthalate) oil absorption of the carbon material of the present embodiment is preferably 65 ml/100 g or less, more preferably 62 ml/100 g or less, further preferably 60 ml/100 g or less, particularly preferably 57 ml/100 g or less. The amount of DBP oil absorption is preferably 30 ml/100 g or more, more preferably 40 ml/100 g or more.
When the amount of DBP oil absorption is within the above range, it is meant that the degree of progress of spheronization of the carbon material is sufficient, there is a tendency to hardly cause streak in coating with a slurry including the carbon material, and there is a tendency to avoid decrease of a reaction surface because of the presence of a pore structure also in a particle.
The amount of DBP oil absorption is defined as the value measured by charging 40 g of a measurement material (carbon material) and setting the dripping rate to 4 ml/min, the rotational speed to 125 rpm, and the set torque to 500 N·m, according to ISO 4546. For example, Absorptometer Type E manufactured by Brabender Technologies Inc. can be used in such measurement.

· Average particle diameter d10

The particle diameter (d10) at which the cumulative particle diameter from the small particle side in volume-based measurement of the carbon material of the present embodiment reaches 10% is preferably 30 $\mu$m or less, more preferably 20 $\mu$m or less, further preferably 17 $\mu$m or less, preferably 1 $\mu$m or more, more preferably 5 $\mu$m or more, further preferably 10 $\mu$m or more.

When the d10 is within the above range, a tendency of particle aggregation is not too strong, and the occurrence of any process failure such as an increase in slurry viscosity, and deterioration in electrode strength and deterioration in initial charge and discharge efficiency in a secondary battery can be avoided. In addition, deterioration in high-current-density charge and discharge characteristics and deterioration in low-temperature input-output characteristics tend to be able to be avoided.

The d10 is defined as the value at which the particle frequency percentage reaches 10% in accumulation from the smaller particle diameter in a particle size distribution obtained in measurement of the average particle diameter d50.

· Average particle diameter d90

The particle diameter (d90) at which the cumulative particle diameter from the small particle side in volume-based measurement of the carbon material of the present embodiment reaches 90% is preferably 100 $\mu$m or less, more preferably 70 $\mu$m or less, further preferably 60 $\mu$m or less, still further preferably 50 $\mu$m or less, particularly preferably 45 $\mu$m or less, most preferably 42 $\mu$m or less, and preferably 20 $\mu$m or more, more preferably 23 $\mu$m or more, further preferably 25 $\mu$m or more.

When the d90 is within the above range, there are tendencies to enable deterioration in electrode strength and deterioration in initial charge and discharge efficiency to be avoided in a secondary battery and also to enable the occurrence of process failure such as streak in coating with slurry, deterioration in high-current-density charge and discharge characteristics, and deterioration in low-temperature input-output characteristics to be avoided.

The d90 is defined as the value at which the particle frequency percentage reaches 90% in accumulation from the smaller particle diameter in a particle size distribution obtained in measurement of the average particle diameter d50.

<Organic compound>

The organic compound with which the carbon material is coated may be a single compound or may be a mixture of two or more compounds.

The organic compound is not particularly limited, and is preferably a reactive substituent-containing polymer.

A preferable structure of the reactive substituent-containing polymer preferably has at least one structure selected from the group consisting of a straight structure, a graft type structure, a star type structure, and a three-dimensional network structure.

The reactive substituent is not particularly limited, and is preferably a hydroxyl group, a carboxyl group, a carbonyl group, a (meth)acrylic group, an epoxy group, a vinyl group, a hydrolyzable silyl group, a silanol group, hydrosilyl group, or an acetyl group, more preferably a hydroxyl group, a carboxyl group, a carbonyl group, a hydrolyzable silyl group, a silanol group, or an acetyl group, particularly preferably an alcoholic hydroxyl group, a carbonyl group, a silanol group, or an acetyl group, most preferably an alcoholic hydroxyl group or an acetyl group, because of being high in reaction activity and being taken with a crosslinking agent to thereby form a covalent bond excellent in water resistance and solvent resistance.

The reactive substituent-containing polymer is more preferably poorly soluble in a non-aqueous electrolytic solution from the viewpoint that a negative electrode active material is enhanced in resistance to an electrolytic solution and a coating film of a negative electrode material is hardly eluted in an electrolytic solution. In the present embodiment, even if the reactive substituent-containing polymer can be dissolved in a non-aqueous electrolytic solution, the polymer can react with a crosslinking agent and thus cured, and thus can be poorly soluble in an electrolytic solution. The "poor solubility" in a non-aqueous electrolytic solution means that, when the reactive substituent-containing polymer is immersed in a solvent where ethylene carbonate and ethyl methyl carbonate are mixed at a volume ratio of 3:7, at 60°C for 5 hours, the dry mass reduction rate before and after immersion is 10% by mass or less.

A specific example of the reactive substituent-containing polymer is not particularly limited, and is preferably a polyvinyl alcohol-based resin, a polyol-based resin such as an acrylic polyol resin, a polyester polyol resin, or a polyether polyol resin, a silicone resin having a silanol or hydrolyzable silyl group, an epoxy resin, an acrylic resin having a hydrolyzable silyl group, or a polyester resin, more preferably a polyvinyl alcohol-based resin, an acrylic polyol resin, a polyester polyol resin, an acrylic resin having a hydrolyzable silyl group, or a polyester resin, particularly preferably a polyvinyl alcohol-based resin, an acrylic polyol resin, or a polyester polyol resin because such a resin has a plurality of hydroxyl groups or groups to be hydrolyzed into hydroxyl groups in its molecule and can react with a crosslinking agent to thereby form a film poorly soluble in water and an electrolytic solution, and is most preferably a polyvinyl alcohol-based resin because a cured product is excellent in solvent resistance.

· Polyvinyl alcohol resin-derived compound (PVOH-based resin)

The polyvinyl alcohol resin-derived compound (hereinafter, sometimes appropriately designated as "PVOH-based resin") is not particularly limited in terms of a specific structure thereof as long as it is a resin-derived compound having a vinyl alcohol structure unit, and is typically obtained by saponification of a polycarboxylic acid vinyl ester obtained by polymerization of a carboxylic acid vinyl ester monomer such as vinyl acetate, but not limited thereto.

Examples of the PVOH-based resin include a non-modified PVOH or modified PVOH-based resin.

The modified PVOH-based resin may be a copolymerized modified PVOH-based resin synthesized by copolymerizing a monomer other than a vinyl ester-based monomer donating a PVOH structure unit, or may be a post-modified PVOH-based resin obtained by synthesis of a non-modified PVOH and then appropriate modification of a main chain or a side chain by a compound.

Examples of a copolymerizable monomer (unsaturated monomer) usable in the copolymerized modified PVOH-based resin include an olefin compound such as ethylene, propylene, isobutylene, $\alpha$-octene, $\alpha$-dodecene, or $\alpha$-octadecene; a hydroxy group-containing $\alpha$-olefin compound such as 3-buten-1-ol, 4-penten-1-ol, or 5-hexen-1-ol, and a derivative thereof such as an acylated product thereof; an unsaturated acid compound such as acrylic acid, methacrylic acid, crotonic acid, maleic acid, maleic anhydride, itaconic acid, or undecylenic acid, or a salt thereof; monoester or dialkyl ester; an amide compound such as diacetone acrylamide, acrylamide, or methacrylamide; an olefin sulfonic acid compound such as ethylene sulfonic acid, allyl sulfonic acid, or methallyl sulfonic acid, or a salt thereof; isopropenyl acetate, or a substituted vinyl acetate compound such as 1-methoxyvinyl acetate; or an allyl ether having a poly(oxyalkylene) group, such as polyethylene glycol allyl ether, methoxy polyethylene glycol allyl ether, polypropylene glycol allyl ether, or polyethylene glycol-polypropylene glycol allyl ether.

Examples of the copolymerized modified PVOH-based resin include a PVOH-based resin having a primary hydroxyl group in a side chain. Examples of such a PVOH-based resin include a PVOH-based resin modified by 1,2-diol at a side chain, obtained by copolymerization of 3,4-diacetoxy-1-butene, vinylethylene carbonate, glycerin mono allyl ether or the like; or a PVOH-based resin having a hydroxymethyl group in a side chain, obtained by copolymerization of a hydroxymethylvinylidene diacetate such as 1,3-diacetoxy-2-methylenepropane, 1,3-dipropynyloxy-2-methylenepropane, or 1,3-dibutyronyloxy-2-methylenepropane, and saponification of the resulting copolymer.

Examples of the post-modification method with respect to the post-modified PVOH-based resin include a method involving acetoacetic acid esterification, acetalization, urethanization, etherification, grafting, phosphoric acid esterification, or oxyalkylenation of the non-modified PVOH or the modified PVOH-based resin.

In the present embodiment, the above non-modified PVOH and modified PVOH can be each used. The present embodiment is characterized in that even PVOH to be easily dissolved in cool water, which has not been able to be conventionally used singly in a coating film because of being easily eluted when formed into an aqueous slurry for coating an electrode sheet, can be made poorly soluble due to a crosslinking agent and thus suitably used in the coating film of the coated carbon material. Thus, in the case of the non-modified PVOH, a partially saponified product can be used which is good in wettability to a hydrophobic surface of graphite and which is hardly increased in viscosity in the form of an aqueous solution even at a low temperature. In the case of the modified PVOH, for example, an anionically modified group-containing PVOH having a functional group excellent in lithium conductivity, such as a carboxylic acid group or a sulfonic acid group, in a side chain, or a nonionically modified group-containing PVOH having a hydroxyalkyl group, an oxyethylene group, or the like in a side chain can also be used, and the resistance of the coating film can be reduced.

The solubility of the PVOH-based resin differs depending on the degree of saponification and the degree of polymerization. The degree of saponification of the PVOH-based resin is not especially limited, and a wide range thereof can be selected because poor solubility can be achieved by combination use with a crosslinking agent in the present embodiment. In the case of the non-modified PVOH, the degree of saponification is usually 70% by mol or more, preferably 78 to 100% by mol, particularly preferably 85 to 99.8% by mol. In general, the PVOH-based resin tends to exhibit the highest rate of elution in water at a degree of saponification of about 88% by mol, although there are some differences depending on the degree of polymerization, the type of modification, and the like. Accordingly, the degree of saponification is preferably higher or lower than about 88% in order to improve water resistance of a cured product reacted with a crosslinking agent.

The PVOH-based resin, when has a modified group, is hardly crystallized even at a high degree of saponification and has a high solubility in water, and thus the degree of saponification is usually 85% by mol or more, preferably 90% by mol or more, more preferably 98% by mol or more. The upper limit is usually 100% by mol or less, preferably 99.8% by mol or less. The degree of saponification is the value measured according to ISO 15023-2.

In the case of coating in a solvent system, PVOH lightly saponified, having a low degree of saponification of 38 to 55% by mol, can be used in combination with a crosslinking agent.

The average degree of polymerization of the PVOH-based resin is not especially limited, and is usually 200 to 3000, preferably 250 to 2800, particularly preferably 300 to 2600 in the case of the non-modified PVOH. When the PVOH-based resin has a modified group, the average degree of polymerization is usually 100 or more, preferably 200 or more, more preferably 250 or more. This range can easily prevent the solubility from being too high. The average degree of polymerization is usually 4000 or less, preferably 3500 or less, more preferably 2800 or less. This range can easily prevent the solubility from being too low. The average degree of polymerization is the value measured by an aqueous solution viscosity measurement method (ISO 15023-2).

Only one resin may be used or two or more resins may be blended and used in the PVOH-based resin. In this case, those different in structure unit may be adopted, those different in degree of saponification may be adopted, or those different in average degree of polymerization may be adopted. When such resins are blended and used, the respective average values of the degrees of saponification and the average degrees of polymerization of all the PVOH-based resins are required to be within the above ranges.

The PVOH-based resin may be partially modified. When the PVOH-based resin is modified, the rate of modification thereof is preferably in a range so that, when 10 g of the resin particle is dispersed in 100 g of water at 20°C under stirring and then heated to 90°C at 1°C/min under stirring, 90% by mass or more thereof is dissolved within 60 minutes.

In the present embodiment, a crosslinking agent can be used for an enhancement in solvent resistance of the coating film made of the organic compound.

The method for forming the crosslinked product (crosslinking method), here used, is, for example, heat treatment, crosslinking agent treatment, ultraviolet light treatment, or electron beam treatment. In particular, a thermally crosslinked product obtained by crosslinking with heat treatment is preferable.

The crosslinking agent used in the crosslinking agent treatment is not particularly limited, and is preferably organic and/or inorganic crosslinking agent(s) having two or more crosslinkable reactive groups, and more specifically, one known as the crosslinking agent of the PVOH-based resin, having a carboxyl group, an acetoacetyl group, or the like, can be used. Examples include an aldehyde compound, for example, a monoaldehyde compound such as formaldehyde or acetaldehyde, or a polyvalent aldehyde compound such as glyoxal, glutaraldehyde, or dialdehyde starch; an amine-based compound such as meta-xylenediamine, norbornane diamine, 1,3-bisaminomethylcyclohexane, bisaminopropylpiperazine, 3,3'-dimethyl-4,4'-diaminodicyclohexylmethane, 4,4'-diaminodicyclohexylmethane, 4,4'-diaminodiphenylmethane, 3,3',5,5'-tetramethyl-4,4'-diaminodiphenylmethane, 3,3',5,5'-tetraethyl-4,4'-diaminodiphenylmethane, 3,3'-dimethyl-4,4'-diamino-5,5'-diethyldiphenylmethane, 4,4'-diaminodiphenyl ether, diaminodiphenylsulfone, 1,2-phenylenediamine, 1,3-phenylenediamine, 1,4-phenylenediamine, 3-methyl-1,2-phenylenediamine, 4-methyl-1,2-phenylenediamine, 2-methyl-1,3-phenylenediamine, 4-methyl-1,3-phenylenediamine, 2-methyl-4,6-diethyl-1,3-phenylenediamine, 2,4-diethyl-6-methyl-1,3-phenylenediamine, 2,4,6-trimethyl-1,3-phenylenediamine, or 2-chloro-1,4-phenylenediamine; a methylol compound such as methylolated urea or methylolated melamine; a reaction product of ammonia and formaldehyde, such as hexamethylenetetramine; a boron compound such as boric acid or borax; a zirconium compound such as basic zirconyl chloride, zirconyl nitrate, or zirconium acetate ammonium; a titanium orthoester compound such as tetramethyl titanate; a titanium chelate such as titanium ethylacetoacetonate; a titanium compound such as titanium acylate such as polyhydroxy titanium stearate; an aluminum compound such as an aluminum organic acid chelate such as aluminum acetylacetonate; an organoalkoxysilane compound having an organic reactive group, such as a silane coupling agent; a polyvalent epoxy compound such as ethylene glycol diglycidyl ether, polyethylene glycol diglycidyl ether, glycerin diglycidyl ether, glycerin triglycidyl ether, hexanediol diglycidyl ether, or trimethylolpropane triglycidyl ether; a polyamide polyamine-epihalohydrin-based resin such as various isocyanate-based compounds or polyamide polyamine-epichlorohydrin-based resins; or a component having a three-dimensional siloxane crosslinked structure derived from a hydrolyzed polycondensate of alkoxysilane and/or its low condensate. In particular, a component having a three-dimensional siloxane crosslinked structure derived from a hydrolyzed polycondensate of alkoxysilane and/or its low condensate is preferable because a coating film excellent in water resistance and solvent resistance can be formed.

The content of the crosslinking agent is preferably 0.05 to 30 parts by mass, more preferably 0.5 to 20 parts by mass, particularly preferably 1 to 10 parts by mass in terms of solid content based on 100 parts by mass of the PVOH-based resin. If the content of the crosslinking agent is too low, the effect by the crosslinking agent tends to be poor, and if the content is more than the upper limit value, the unreacted crosslinking agent is easily eluted or precipitated.

The mixing method of the PVOH-based resin and the crosslinking agent, here used, is, for example, (i) a method for mixing an aqueous solution of the PVOH-based resin and an aqueous solution of the crosslinking agent, (ii) a method for spraying an aqueous solution of the crosslinking agent to the PVOH-based resin in the form of a solid, or (iii) a method for spraying an aqueous solution of the PVOH-based resin to the crosslinking agent in the form of a solid.

The PVOH-based resin may be a commercially available product, or may be synthesized and obtained. In the case of synthesis, the synthesis can be made by a known method.

<Component having three-dimensional crosslinked structure>

The coated carbon material of the present embodiment can contain a component having a three-dimensional crosslinked structure or may contain a component having a three-dimensional siloxane crosslinked structure derived from a hydrolyzed polycondensate of alkoxysilane and/or its low condensate, in a coating film formed on an inner wall of intra-particle pores. The coating film contains a component having a three-dimensional siloxane crosslinked structure, and thus the PVOH-based resin contained in the coating film can be inhibited from being eluted in an aqueous slurry or an electrolytic solution and the coating film can be inhibited from being swollen.

The three-dimensional crosslinked structure herein is, for example, a structure where organic and/or inorganic crosslinking agent(s) having two or more crosslinkable reactive groups are/is crosslinked, and the three-dimensional siloxane crosslinked structure herein means a steric network structure mainly of a siloxane unit, which is formed by mutual hydrolysis polycondensation of trialkoxysilane having three alkoxy groups per molecule and/or tetraalkoxysilane having four alkoxy groups per molecule, as the alkoxysilane.

The coating film of the coated carbon material of the present embodiment can be used in combination with any additive for an enhancement in battery performance as long as curability, water resistance, solvent resistance, and the like of the coating film are not affected. Preferable examples include a known surfactant or silane coupling agent each contributing to impart wettability or adhesiveness with a negative electrode active material or a binding material resin, or an inorganic oxide particle, a lithium compound particle, a conductive polymer such as polyaniline sulfonic acid, or an organic compound forming a complex ion with a lithium ion, such as polyethylene oxide or complex hydrate, each having an effect on a reduction in resistance of the coating film.

<Physical properties of coated carbon material>

· Volume-based average particle diameter (average particle diameter d50)

The volume-based average particle diameter (also designated as "average particle diameter d50") of the coated carbon material of the present embodiment is preferably 1 um or more, more preferably 5 um or more, further preferably 10 $\mu$m or more, particularly preferably 15 $\mu$m or more, most preferably, 16.5 $\mu$m or more. The average particle diameter d50 is preferably 50 $\mu$m or less, more preferably 40 um or less, further preferably 35 $\mu$m or less, particularly preferably 30 $\mu$m or less, most preferably 25 $\mu$m or less. When the average particle diameter d50 is within the above range, a secondary battery obtained with the coated carbon material tends to be suppressed in an increase in irreversible capacity and loss in initial battery capacity, and furthermore the occurrence of process failure such as streak in slurry coating, deterioration in high-current-density charge and discharge characteristics, and deterioration in low-temperature input-output characteristics can also be suppressed.

The average particle diameter d50 is herein defined as one determined by suspending 0.01 g of the coated carbon material in 10 mL of an aqueous 0.2% by mass solution of polyoxyethylene sorbitan monolaurate (examples include Tween 20 (registered trademark)) as a surfactant to provide a measurement sample, introducing the measurement sample to a commercially available laser diffraction/scattering particle size distribution measurement apparatus (for example, LA-920 manufactured by HORIBA Ltd.), irradiating the measurement sample with 28 kHz ultrasonic wave at an output of 60 W for 1 minute, and then measuring the volume-based median diameter with the measurement apparatus.

· Degree of circularity

The degree of circularity of the coated carbon material of the present embodiment is 0.88 or more, preferably 0.90 or more, more preferably 0.91 or more. The degree of circularity is preferably 1 or less, more preferably 0.98 or less, further preferably 0.97 or less. When the degree of circularity is within the above range, deterioration in high-current-density charge and discharge characteristics of a secondary battery tends to be able to be suppressed. The degree of circularity is defined by the following expression, and a degree of circularity of 1 means a theoretically true sphere.

$$\text{Degree of circularity} = \frac{\text{(Boundary length of corresponding circle having same area as in particle projection shape)}}{\text{(Actual boundary length of particle projection shape)}}$$

The value of the degree of circularity, here adopted, can be, for example, a value determined by using a flow type particle image analyzer (for example, FPIA manufactured by Sysmex Industrial), dispersing about 0.2 g of a specimen (coated carbon material) in an aqueous 0.2% by mass solution (about 50 mL) of polyoxyethylene sorbitan monolaurate as a surfactant, irradiating the dispersion liquid with 28 kHz ultrasonic wave at an output of 60 W for 1 minute, and then indicating the detection range to 0.6 to 400 um and subjecting a particle having a particle diameter in the range from 1.5 to 40 $\mu$m, to measurement.

The method for enhancing the degree of circularity is not particularly limited, but one involving spheronization by application of spheronization treatment is preferable because the shape of an inter-particle void in a negative electrode formed is tailored. Examples of the spheronization treatment include a method for mechanical approximation to a spherical shape by application of a shear force and/or a compression force, and a mechanical/physical treatment method for granulating a plurality of coated carbon material fine particles by an attachment force of a binder or the particles themselves.

• Tap density

The tap density of the coated carbon material of the present embodiment is preferably 0.7 $g/cm^3$ or more, more preferably 0.8 $g/cm^3$ or more, further preferably 0.85 $g/cm^3$ or more, particularly preferably 0.9 $g/cm^3$ or more, most preferably 0.95 $g/cm^3$ or more, preferably 1.3 $g/cm^3$ or less, more preferably 1.2 $g/cm^3$ or less, further preferably 1.1 $g/cm^3$ or less.

When the tap density is within the above range, processability, for example, streak is improved during electrode sheet production and high-speed charge and discharge characteristics are excellent. The carbon density in a negative electrode coating film is hardly increased and thus rollability is also favorable, and a high-density negative electrode sheet tends to be easily formed.

The tap density is defined as the density determined from the volume and the mass of a specimen, which are measured with a powder density measurement tool by dropping the coated carbon material of the present embodiment through a sieve with an aperture of 300 um onto a cylindrical tap cell having a diameter of 1.6 cm and a volume of 20 $cm^3$ to fill the cell and then performing tapping of a stroke length of 10 mm 1000 times.

· X-ray parameter

The value of d (interlayer distance) of the lattice place (002 plane) of the coated carbon material of the present embodiment, determined by X-ray diffraction according to the Gakushin method, is preferably 0.335 nm or more and less than 0.340 nm, more preferably 0.339 nm or less, further preferably 0.337 nm or less. When the value of d002 is within the above range, crystallinity of graphite is high, resulting in tendency to suppress an increase in initial irreversible capacity. A value of 0.335 nm corresponds to the theoretical value of graphite.

The crystallite size (Lc) of the coated carbon material, determined by X-ray diffraction according to the Gakushin method, is preferably within the range of 1.5 nm or more, more preferably 3.0 nm or more. When the size is within the above range, a particle not too low in crystallinity is obtained and deterioration in reversible capacity can be suppressed in the case of a secondary battery formed. Herein, the lower limit of Lc corresponds to the theoretical value of graphite.

· Ash content

The ash content included in the coated carbon material of the present embodiment is preferably 1% by mass or less, more preferably 0.5% by mass or less, further preferably 0.1% by mass or less based on the total mass of the coated carbon material. The lower limit of the ash content is preferably 1 ppm or more.

When the ash content is within the above range, degradation in battery performance due to reaction of the coated carbon material and an electrolytic solution during charge and discharge can be suppressed to a negligible level in the case of a secondary battery formed. In addition, excessive amounts of time and energy, and facilities for contamination prevention are not needed for production of the coated carbon material, and thus an increase in cost is also suppressed.

· BET specific surface area ($N_2$-SA) by nitrogen adsorption

The BET specific surface area ($N_2$-SA) by nitrogen adsorption of the coated carbon material of the present embodiment is preferably 1.5 $m^2/g$ or more, more preferably 2.5 $m^2/g$ or more, and is usually 11 $m^2/g$ or less, preferably 8.0 $m^2/g$ or less, more preferably 6.0 $m^2/g$ or less. When the BET specific surface area ($N_2$-SA) is equal to or more than the lower limit value, a site for passage of Li can be sufficiently ensured, and thus high-speed charge and discharge characteristics and output characteristics are excellent. When the specific surface area is equal to or less than the upper limit value, there are tendencies to enable the activity of an active material to an electrolytic solution to be properly suppressed, to enable an increase in initial irreversible capacity to be suppressed, and to enable a high-capacity battery to be produced.

· BET specific surface area (Tol-SA) by toluene adsorption

The BET specific surface area (Tol-SA) by toluene adsorption, of the coated carbon material of the present embodiment, is preferably 1.1 $m^2$/g or more, more preferably 1.8 $m^2$/g or more, and preferably 7.6 $m^2$/g or less, more preferably 5.7 $m^2$/g or less. When the BET specific surface area (Tol-SA) is within the above range, a site for passage of Li can be sufficiently ensured and thus high-speed charge and discharge characteristics and output characteristics are excellent, and the activity of an active material to an electrolytic solution can also be properly suppressed to result in tendencies to enable an increase in initial irreversible capacity to be suppressed and to enable a high-capacity battery to be produced. In addition, gas generation due to side reaction with an electrolytic solution can be suppressed and thus a preferable non-aqueous secondary battery can be provided.

· Basal plane specific surface area by toluene adsorption

The basal plane specific surface area by toluene adsorption, of the coated carbon material of the present embodiment, is preferably 0.5 $m^2$/g or more, more preferably 0.7 $m^2$/g or more, and preferably 4.0 $m^2$/g or less, more preferably 3.0 $m^2$/g or less. When the basal plane specific surface area is within the above range, the activity of an active material to an electrolytic solution can be properly suppressed to result in tendencies to enable an increase in initial irreversible capacity to be suppressed and to enable a high-capacity battery to be produced. In addition, gas generation due to side reaction with an electrolytic solution can be suppressed and thus a preferable non-aqueous secondary battery can be provided.

· Pore volume in range from 10 nm to 1500 nm

The pore volume in the range from 10 nm to 1500 nm in the coated carbon material of the present embodiment is a value measured by a mercury intrusion method (mercury porosimetry), and is preferably 0.03 mL/g or more, more preferably 0.05 mL/g or more, further preferably 0.08 mL/g or more, and preferably 0.3 mL/g or less, more preferably 0.25 mL/g or less, further preferably 0.2 mL/g or less.

When the pore volume in the range from 10 nm to 1500 nm is within the above range, a void into which a non-aqueous electrolytic solution can penetrate is hardly decreased and a tendency to cause too late insertion/extraction of a lithium ion in rapid charge and discharge and accordingly deposition of lithium metal and deterioration in cycle characteristics can be more avoided. Furthermore, a tendency to cause easy absorption of a binding material in such a void in electrode sheet production and accordingly deterioration in electrode sheet strength and deterioration in initial efficiency can also be more avoided.

The total pore volume in the coated carbon material of the present embodiment is preferably 0.1 mL/g or more, more preferably 0.2 mL/g or more, further preferably 0.25 mL/g or more, particularly preferably 0.5 mL/g or more. The total pore volume is preferably 10 mL/g or less, more preferably 5 mL/g or less, further preferably 2 mL/g or less, particularly preferably 1 mL/g or less.

When the total pore volume is within the above range, the amount of a binding material in electrode sheet formation is not required to be excess, and the dispersion effect of a thickener and/or a binding material in electrode sheet formation is also easily obtained.

The coated carbon material of the present embodiment has pores having a size of 10 nm or more and 500 nm or less, therein. In other words, a pore size distribution has a peak at 10 nm or more and 500 nm or less.

A mercury porosimeter (AutoPore 9520: manufactured by Micromeritics Instrument Corporation) can be used as the apparatus for mercury porosimetry. A specimen (coated carbon material) is weighed so as to be in an amount of about 0.2 g, enclosed in a cell for a powder, and subjected to pre-treatment by degassing under vacuum (50 μmHg or less) at 25°C for 10 minutes.

Subsequently, the pressure is reduced to 4 psia (about 28 kPa) and mercury is introduced to the cell, and the pressure is increased stepwise from 4 psia (about 28 kPa) to 40000 psia (about 280 MPa) and then reduced to 25 psia (about 170 kPa).

The number of steps during pressure increase is 80 points or more, and the amount of mercury intrusion is measured after an equilibrium time of 10 seconds in each step. A pore distribution is calculated based on the mercury intrusion curve thus obtained, by use of the Washburn's equation.

The calculation is made under the assumption that the surface tension ($\gamma$) and the contact angle ($\psi$) of mercury are respectively 485 dyne/cm and 140°.

· True density

The true density of the coated carbon material of the present embodiment is preferably 1.9 $g/cm^3$ or more,

more preferably 2 g/cm$^3$ or more, further preferably 2.1 g/cm$^3$ or more, particularly preferably 2.2 g/cm$^3$ or more, and the upper limit thereof is 2.26 g/cm$^3$. The upper limit is the theoretical value of graphite. When the true density is within the range, crystallinity of carbon is not too low, and an increase in initial irreversible capacity in the case of a secondary battery formed can be suppressed.

· Aspect ratio

The aspect ratio of the coated carbon material of the present embodiment in the form of a powder is 1 or more in theory, and is preferably 1.1 or more, more preferably 1.2 or more. The aspect ratio is preferably 10 or less, more preferably 8 or less, further preferably 5 or less, particularly preferably 3 or less.

When the aspect ratio is within the above range, there are tendencies to hardly cause streak with a slurry (negative electrode-forming material) including the coated carbon material in electrode sheet formation, to obtain a uniform coating surface, and to avoid deterioration in high-current-density charge and discharge characteristics of a secondary battery.

The aspect ratio is expressed by A/B under the assumption that, when a coated carbon material particle is three-dimensionally observed, the longest diameter and the shortest diameter perpendicular thereto are respectively defined as the diameter A and the diameter B. The coated carbon material particle is observed with a scanning electron microscope that can perform magnification observation. Any 50 such coated carbon material particles fixed to an end of a metal having a thickness of 50 microns or less are selected, the stage to which such each specimen is fixed is rotated and inclined to measure A and B, and the average value with respect to A/B is determined.

· Maximum particle diameter dmax

The maximum particle diameter dmax of the coated carbon material of the present embodiment is preferably 200 μm or less, more preferably 150 um or less, further preferably 120 μm or less, particularly preferably 100 μm or less, most preferably 80 um or less. When the dmax is within the above range, the occurrence of any process failure such as streak tends to be able to be suppressed.

The maximum particle diameter is defined as the value of the largest particle diameter in particle measurement, in a particle size distribution obtained in measurement of the average particle diameter d50.

· Raman R value

The Raman R value of the coated carbon material of the present embodiment is preferably 0.1 or more, more preferably 0.15 or more, further preferably 0.2 or more. The Raman R value is preferably 0.6 or less, more preferably 0.5 or less, further preferably 0.4 or less.

The Raman R value is defined as one calculated as the intensity ratio ($I_B/I_A$) determined in measurement of the intensity $I_A$ of the peak $P_A$ around 1580 cm$^{-1}$ and the intensity $I_B$ of the peak $P_B$ around 1360 cm$^{-1}$ in a Raman spectrum determined by Raman spectroscopy.

Herein, the "around 1580 cm$^{-1}$" refers to the range from 1580 to 1620 cm$^{-1}$ and the "around 1360 cm$^{-1}$" refers to the range from 1350 to 1370 cm$^{-1}$.

When the Raman R value is within the above range, there are tendencies to hardly increase crystallinity of a coated carbon material particle surface, to hardly orient any crystal in a parallel direction to a negative electrode sheet in the case of an increase in density, and to avoid deterioration in load characteristics. There are further tendencies to also hardly disturb any crystal on the particle surface, to suppress an increase in reactivity of a negative electrode with an electrolytic solution, and enable deterioration in charge and discharge efficiency of a secondary battery and increase of gas generation to be avoided.

The Raman spectrum can be measured with a Raman spectrometer. Specifically, a particle to be measured is naturally dropped into a measurement cell to thereby pack a specimen, and measurement is performed while the interior of the measurement cell is irradiated with argon ion laser and the measurement cell is rotated in a plane perpendicular to such laser light. Measurement conditions are as follows.

Wavelength of argon ion laser light: 514.5 nm
Laser power on specimen: 25 mW
Resolution: 4 cm$^{-1}$
Measurement range: 1100 cm$^{-1}$ to 1730 cm$^{-1}$; peak intensity measurement, peak half-value width: background treatment, smoothing treatment (convolution by simple average, 5 points)

· Amount of DBP oil absorption

The amount of DBP (dibutyl phthalate) oil absorption of the coated carbon material of the present embodiment is preferably 65 ml/100 g or less, more preferably 62 ml/100 g or less, further preferably 60 ml/100 g or less, particularly preferably 57 ml/100 g or less. The amount of DBP oil absorption is preferably 30 ml/100 g or more, more preferably 40 ml/100 g or more.

When the amount of DBP oil absorption is within the above range, it is meant that the degree of progress of spheronization of the coated carbon material is sufficient, there is a tendency to hardly cause streak in coating with a slurry including the coated carbon material, and there is a tendency to avoid decrease of a reaction surface because of the presence of a pore structure also in a particle.

The amount of DBP oil absorption is defined as the value measured by charging 40 g of a measurement material (coated carbon material) and setting the dripping rate to 4 ml/min, the rotational speed to 125 rpm, and the set torque to 500 N·m, according to ISO 4546. For example, Absorptometer Type E manufactured by Brabender Technologies Inc. can be used in such measurement.

· Average particle diameter d10

The particle diameter (d10) at which the cumulative particle diameter from the small particle side in volume-based measurement of the coated carbon material of the present embodiment reaches 10% is preferably 30 $\mu$m or less, more preferably 20 um or less, further preferably 17 um or less, preferably 1 um or more, more preferably 5 um or more, further preferably 10 um or more.

When the d10 is within the above range, a tendency of particle aggregation is not too strong, and the occurrence of any process failure such as an increase in slurry viscosity, and deterioration in electrode strength and deterioration in initial charge and discharge efficiency in a secondary battery can be avoided. In addition, deterioration in high-current-density charge and discharge characteristics, and deterioration in low-temperature input-output characteristics tends to be able to be avoided.

The d10 is defined as the value at which the particle frequency percentage reaches 10% in accumulation from the smaller particle diameter in a particle size distribution obtained in measurement of the average particle diameter d50.

· Average particle diameter d90

The particle diameter (d90) at which the cumulative particle diameter from the small particle side in volume-based measurement of the coated carbon material of the present embodiment reaches 90% is preferably 100 $\mu$m or less, more preferably 70 $\mu$m or less, further preferably 60 $\mu$m or less, still further preferably 50 um or less, particularly preferably 45 $\mu$m or less, most preferably 42 um or less, and preferably 20 um or more, more preferably 23 um or more, further preferably 25 um or more.

When the d90 is within the above range, there are tendencies to enable deterioration in electrode strength and deterioration in initial charge and discharge efficiency to be avoided in a secondary battery and also to enable the occurrence of process failure such as streak in coating with slurry, deterioration in high-current-density charge and discharge characteristics, and deterioration in low-temperature input-output characteristics to be avoided.

The d90 is defined as the value at which the particle frequency percentage reaches 90% in accumulation from the smaller particle diameter in a particle size distribution obtained in measurement of the average particle diameter d50.

The amount of coating with the organic compound in the coated carbon material is not particularly limited, and is 0.05% by mass or more, preferably 0.1% by mass or more, and 3% by mass or less, preferably 1% by mass or less. The amount of coating with the organic compound in the coated carbon material can be measured from the amount of mass reduction by heating the coated carbon material.

<Method for producing coated carbon material>

A coated carbon material for a secondary battery (also referred to as "secondary-battery negative-electrode active material") according to the present embodiment can be produced by, for example, the following method.

The following description is made with a carbon material (A), an organic compound (B), a secondary-battery negative-electrode active material (C), and a solution (D), for the purpose of convenience.

1) Mixing step
2) Internal immersion step
3) Drying step

The organic compound (B) is added to an organic solvent, water, or a mixed solvent thereof and the solution (D) is mixed with the carbon material (A) in mixing step 1), and then the solution (D) is immersed in the carbon material (A) in internal immersion step 2), according to the following 2-1) or 2-2). 2-1) the carbon material (A) is subjected to isotropic pressurization treatment in the solution (D). 2-2) the carbon material (A) is boiled in the solution (D) and then cooled and mixed.

Thereafter, the solution (D) is separated by filtration or removed by washing, and then the carbon material (A) is dried by heating or/and under reduced pressure in drying step 3), and thus a secondary-battery negative-electrode active material where the carbon material (A) is coated with the organic compound (B) can be obtained.

The present embodiment is characterized in that an inner wall of pores in the coated carbon material particle is partially coated with the organic compound.

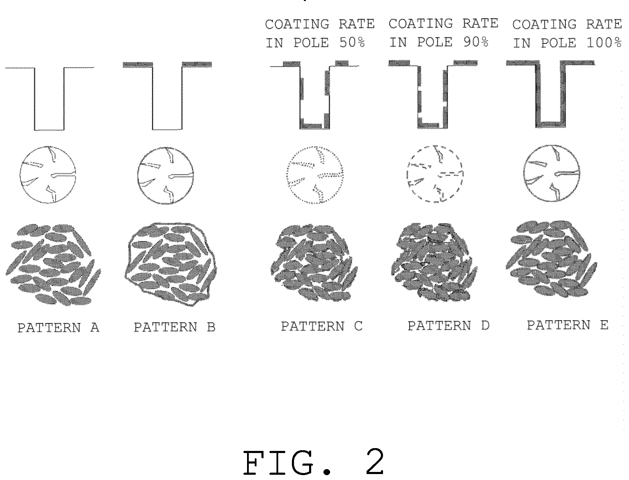

The partial coating does not mean, as in patterns A and B of FIG. 2, no coating of an inner wall of pores. In such a case, an electrolytic solution penetrating into pores induce decomposition reaction on an inner wall of the pores to lead to a reduction in initial efficiency.

The partial coating also does not mean the complete coating of an inner wall of pores, as in pattern E of FIG. 2. In such a case, a problem caused is that the interface resistance of a negative electrode is increased to lead to deterioration in input-output characteristics of a battery.

The partial coating in the present embodiment refers to coating as in patterns C and D of FIG. 2, and refers to coating of preferably 30% or more and 90% or less, more preferably 50% or more and 85% or less of the area of an inner wall of pores.

The control of the coating rate can provide patterns C, D, and E by, for example, appropriate adjustment of the concentration of the solution (D).

The coating of the outer periphery of the secondary-battery negative-electrode active material (C) can be removed by washing the coated carbon material particle with an organic solvent and/or water after the above coating treatment. The secondary-battery negative-electrode active material (C) has no coating on the outer periphery, and thus the conductivity between particles of the secondary-battery negative-electrode active material (C) can be enhanced during negative electrode sheet formation, and binding of the secondary-battery negative-electrode active material (C) with the binding material resin and the copper foil of the current collector can be stronger to thereby prevent a negative electrode layer from being peeled and dropped from the copper foil of the current collector.

The solvent used is not particularly limited as long as the organic compound is dissolved or dispersed, and examples preferably include water, ethyl methyl ketone, toluene, acetone, methyl isobutyl ketone, ethanol, or methanol. In particular, water, ethyl methyl ketone, acetone, methyl isobutyl ketone, ethanol, or methanol is more preferable in terms of cost and ease of drying.

Step (1): mixing step

The method for mixing the carbon material (A) and the organic compound (B) is not particularly restricted, and the carbon material (A) and the organic compound (B) are preferably uniformly mixed.

Examples of the mixing method include a method involving stirring with a stirring blade in a fixed container, a method involving rolling and mixing a powder with rotation of a container by itself, or a method involving fluidizing and mixing by airflow. In particular, a method involving stirring with a stirring blade in a fixed container is preferable from the viewpoint of mixing uniformity.

Examples of the fixed container here include an inverse conical type, a longitudinally mounted cylinder type, a laterally mounted cylinder type, or a U-type trough container, and a laterally mounted cylinder type container is preferable from the viewpoint of attachment in a machine and uniform mixing ability.

Examples of the shape of the stirring blade include, in the case of a horizontal axis system, a ribbon type, screw type, uniaxial paddle type, multiaxial paddle type, anchor type, or fork type shape, and, in the case of a vertical axis system, a ribbon type, screw type, planetary type, conical screw type, or downside high-speed rotary blade shape, and a fork type shape in the case of a horizontal axis system is preferable from the viewpoint of uniform mixing ability.

For example, a mixer being a laterally mounted cylinder type container having a horizontal axis system of a fork type stirring blade is preferably used.

The peripheral velocity of the stirring blade is preferably 0.1 m/s or more, and is more preferably 1 m/s or more, further preferably 2 m/s or more, particularly preferably 3 m/s or more, and preferably 100 m/s or less, more preferably 80 m/s or less, further preferably 50 m/s or less from the viewpoint of mixing uniformity.

The treatment time is preferably 0.5 minutes or more, more preferably 1 minute or more, further preferably 5 minutes or more, and preferably 5 hours or less, more preferably 1 hour or less, further preferably 20 minutes or less. When the treatment time is within the above range, not only treatment ability can be maintained, but also more uniform mixing can be made.

The mixing temperature is preferably 1°C or more, more preferably 10°C or more, and preferably 100°C or less, more preferably 80°C or less. When the mixing temperature is within the above range, an increase in viscosity of the solution (D) can be suppressed, and more uniform mixing can be made. The cost for temperature control can also be suppressed.

The ratio of the organic compound to the carbon material, in a solution where the organic compound (B) is diluted relative to the carbon material (A), preferably 0.05% by mass or more, more preferably 0.1% by mass or more, preferably 10% by mass or less, more preferably 3% by mass or less. When the ratio is within the above range, uniform mixing can be made and a uniform coating can be formed.

Step (2): internal immersion step

The method for immersing the solution (D) in the carbon material (A) is not particularly limited, and the organic compound can be immersed in the carbon material (A) by, for example, the following method as in 2-1) or 2-2).

2-1) the carbon material (A) is subjected to isotropic pressurization treatment in the solution (D).
2-2) the carbon material (A) is boiled in the solution (D) and then cooled and mixed.

Step 2-1) of isotropic pressurization treatment of the carbon material (A) in the solution (D) is described in detail.
Conditions of the isotropic pressurization treatment are not particularly limited, and the pressurization treatment can be performed at 0.1 MPa or more and 100 MPa or less to thereby push the solution (D) into intra-particle pores of the carbon material (A). Such conditions of the pressurization treatment are required to be appropriately selected by the amount and the shape of the intra-particle pores, and the pressurization treatment is preferably performed at 0.1 MPa or more, more preferably 1 MPa or more, further preferably 5 MPa or more, and preferably 100 MPa or less, more preferably 50 MPa or less, further preferably 10 MPa or less in order to sufficiently wet an inner wall of the pores with the solution (D).
The time for the pressurization treatment can be 1 minute or more and 30 minutes or less, to thereby allow the solution (D) to be pushed into also pores having a small inlet diameter, into which the solution (D) hardly penetrates. The time for the pressurization treatment is preferably 1 minute or more, more preferably 5 minutes or more, further preferably 10 minutes or more in order to sufficiently wet an inner wall of pores having a small size, with the solution (D), and is preferably 30 minutes or less, more preferably 20 minutes or less in order to decrease the load of the pressurization apparatus.
After the pressurization treatment, the solution (D) not penetrating into any pore of the carbon material (A) may be removed from a mixture of the carbon material (A) and the solution (D), by filtration. The carbon material (A) separated by filtration may be washed with a solvent to thereby remove an excess organic compound (B).
Step 2-2) of boiling treatment of the carbon material (A) in the solution (D) is described in detail.
Conditions of the boiling treatment are not particularly limited, and the mixture of the carbon material (A) and the solution (D) may be heated with being mixed and stirred. The temperature of the boiling treatment can be equal to or more the boiling point of the solvent used in preparation of the solution, and the boiling point + 40°C or less, to thereby boil the solution (D).
The time for the boiling treatment can be 5 minutes or more and 1 hour or less to thereby eject the air placed in an intra-particle pore of the carbon material (A) for replacement with the solution (D). The time for the boiling treatment is preferably 5 minutes or more, more preferably 10 minutes or more, further preferably 20 minutes or more in order to sufficiently wet an inner wall of a pore having a small opening diameter, with the solution (D), and is preferably 1 hour or less, more preferably 30 minutes or less because the effect of the treatment is saturated even if the treatment time is excessively elongated.
After the boiling treatment, the temperature of the mixture of the carbon material (A) and the solution (D) can be lowered, and mixing and stirring can be continued to further fill a pore of the carbon material (A) with the solution (D). Thereafter, the solution (D) not penetrating into any pore of the carbon material (A) may be removed by filtration. The carbon material (A) separated by filtration may be washed with a solvent to remove an excess organic compound (B).
The organic compound (B) can be immersed in inner pores of the carbon material (A) by a method other than the above method 2-1) or 2-2), such as a method involving mixing the carbon material (A) and the solution (D) under reduced pressure, or a method involving ozone-treating the carbon material (A) in advance and thus enhancing wettability to the solution (D).

Step (3): drying step

When the mixture of the carbon material (A) and the solution (D) is heated and thus dried, a temperature equal to or less than the decomposition temperature of the organic compound (B) is preferably adopted, and a temperature equal to or more than the boiling point of the solvent is more preferably adopted. A temperature of 50°C or more and 300°C or less is preferable. When this range is satisfied, a sufficient drying efficiency is achieved and deterioration in battery performance due to the remaining solvent is avoided.

The temperature is preferably 250°C or less, and preferably 100°C or more. When the solution (D) is dried under reduced pressure, the pressure is usually 0 MPa or less and -0.2 MPa or more as expressed by a gauge pressure (difference from atmospheric pressure). When this range is satisfied, drying can be relatively efficiently performed. The pressure is preferably -0.03 MPa or less, and preferably -0.15 MPa or more.

The method for drying a mixture of the carbon material (A) and the organic compound (B) in the drying step is not particularly restricted, and can desirably involve uniform coating with segregation of the organic compound (B) being avoided in the course of drying.

Examples of a heat transfer system include a convective heat transfer system for drying by direct application of hot air, or a conductive heat system for heat transfer from a heat medium via a conduction heating plate, and a conductive heat system is preferable from the viewpoint of yield.

A movement mode of a drying object is achieved with standing drying by drying the drying object being left to still stand, hot air conveyance type drying by drying the drying object being dispersed in hot air or sprayed with hot air, or stirring and drying by drying the drying object being stirred. Here, stirring and drying are preferable from the viewpoint of uniformly drying a particle. The drying step may be performed with the same facilities as or different facilities from those in the mixing step, as long as mixing uniformity and drying ability are retained.

Examples of the stirring and drying method include a method involving drying a mixture in a fixed container under stirring with a stirring blade, a method involving drying a powder being rolled by rotation of a container by itself, or a method involving drying under stirring by fluidizing due to blowing of hot air from a lower portion, a method is preferably used which is a method involving drying a mixture in a fixed container under stirring with a stirring blade, from the viewpoint of uniformity and yield.

Examples of the stirring tank here adopted include an inverse conical type, longitudinally mounted cylinder type, laterally mounted cylinder type, or U-type trough tank, and a laterally mounted cylinder type tank is preferable from the viewpoint of yield/workability/installation space.

Examples of the shape of the stirring blade include, in the case of a horizontal axis system, a ribbon type, screw type, uniaxial paddle type, multiaxial paddle type, anchor type, fork type, or hollow wedge type shape, and, in the case of a vertical axis system, a ribbon type, screw type, conical screw type, or downside high-speed rotary blade shape, and a uniaxial paddle type or fork type shape in the case of a horizontal axis system is preferable.

The peripheral velocity of the stirring blade differs depending on the stirring/drying system, and is preferably 0.01 m/s or more, more preferably 0.2 m/s or more, further preferably 1 m/s or more, particularly preferably 2 m/s or more, preferably 40 m/s or less, more preferably 20 m/s or less, further preferably 10 m/s or less from the viewpoint of uniformity.

In the case of a conductive heat system, examples of the type of a heat medium include a heat medium oil, vapor, or an electric heater, and vapor is preferable in terms of cost. The heat medium is allowed to flow to a stirring tank jacket, a stirring blade, or a stirring shaft, to thereby transfer heat to the drying object via a heat transfer surface, and the heat medium is preferably allowed to flow to all a stirring tank jacket, a stirring blade and a stirring shaft from the viewpoint of heat transfer efficiency.

Examples include a drying machine capable of heating by flowing of a heat medium to a stirring tank jacket in a laterally mounted cylinder type stirring tank, which has a fork type stirring blade of a horizontal shaft system, a CD dryer (KURIMOTO LTD.) capable of heating by flowing of a heat medium to both a rotation shaft provided with a hollow wedge type stirring blade of a system of two mutually-entangled horizontal shafts and a laterally mounted casing with a jacket, a drying machine capable of heating by flowing of a heat medium to a stirring tank jacket and a stirring blade in a laterally mounted cylinder type stirring tank, which has a uniaxial paddle type stirring blade of a horizontal shaft system, RIBOCONE (OKAWARA MFG.CO., LTD.) capable of heating by flowing of a heat medium to a stirring tank jacket in an inverse conical type stirring tank, which has a ribbon type stirring blade of a vertical shaft system, or Amixon (TOYO HITEC Co., LTD.) capable of heating by flowing of a heat medium to a stirring tank jacket and a stirring blade in a longitudinally mounted cylinder type stirring tank, which has a ribbon type stirring blade of a vertical shaft system.

A step of filtering a solution containing the carbon material (A) and the organic compound (B), and a step of washing the resulting residue with water, before drying, may be included. This is preferable because an excess of the organic compound (B), not directly attached to the carbon material (A), can be removed and low-temperature input-output characteristics are enhanced without any deterioration in the effects of an enhancement in initial efficiency and of suppression of gas generation.

<Negative electrode for secondary battery>

A negative electrode for a secondary battery of the present embodiment (hereinafter, also appropriately referred to as "electrode sheet".) not only includes a current collector and a negative electrode active material layer formed on the current collector, but also contains at least the coated carbon material of the present embodiment in the active material layer. A binding material is further preferably contained.

The binding material here used is one having an olefinic unsaturated bond in its molecule. The type thereof is not particularly restricted, and specific examples thereof include styrene-butadiene rubber, styrene-isoprene-styrene rubber, acrylonitrile-butadiene rubber, butadiene rubber, or an ethylene-propylene-diene copolymer. Such a binding material having an olefinic unsaturated bond can be used to thereby reduce swellability of the active material layer in an electrolytic solution. In particular, styrene-butadiene rubber is preferable in terms of availability.

Such a binding material having an olefinic unsaturated bond can be used in combination with the above-mentioned coated carbon material to thereby increase strength of a negative electrode. A high strength of a negative electrode can inhibit a negative electrode from being degraded by charge and discharge, resulting in an elongated cycle lifetime. The negative electrode according to the present embodiment is high in adhesion strength between the active material layer and the current collector, and thus it is presumed that the problem of peeling of the active material layer from the current collector in production of a battery by winding of the negative electrode does not occur even if the content of the binding material in the active material layer is reduced.

The binding material having an olefinic unsaturated bond in its molecule is desirably one high in molecular weight or one high in proportion of an unsaturated bond. Specifically, when the binding material has a large molecular weight, one where the weight average molecular weight is preferably in the range of 10000 or more, more preferably 50000 or more, and preferably 1000000 or less, more preferably 300000 or less is desirable. When the binding material has a high proportion of an unsaturated bond, one where the molar number of an olefinic unsaturated bond per g of the entire binder is preferably in the range of preferably $2.5 \times 10^{-7}$ mol or more, more preferably $8 \times 10^{-7}$ mol or more, and is preferably in the range of $1 \times 10^{-6}$ mol or less, more preferably $5 \times 10^{-6}$ mol or less is desirable. The binding material may satisfy at least any one of the specification about the molecular weight and the specification about the proportion of an unsaturated bond, and more preferably simultaneously satisfies both the specifications. When the molecular weight of the binding material having an olefinic unsaturated bond is within the above range, mechanical strength and flexibility are excellent.

The degree of unsaturation of the binding material having an olefinic unsaturated bond is preferably 15% or more, more preferably 20% or more, further preferably 40% or more, and is preferably 90% or less, more preferably 80% or less. The degree of unsaturation represents the proportion (%) of a double bond relative to a repeating unit of a polymer.

In the present embodiment, a binding material having no olefinic unsaturated bond can also be used in combination with the above binding material having an olefinic unsaturated bond as long as the effects of the present invention are not impaired. The mixing ratio of the binding material having no olefinic unsaturated bond to the binding material having an olefinic unsaturated bond is preferably in the range of 150% by mass or less, more preferably 120% by mass or less.

While the binding material having no olefinic unsaturated bond can be used in combination to thereby enhance coatability, a too large amount of combination use causes deterioration in strength of the active material layer.

Examples of the binding material having no olefinic unsaturated bond include a polysaccharide thickener such as methyl cellulose, carboxymethyl cellulose, starch, carrageenan, pullulan, guar gum, or xanthan gum, polyether such as polyethylene oxide or polypropylene oxide, vinyl alcohol such as polyvinyl alcohol or polyvinyl butyral, polyacid such as polyacrylic acid or polymethacrylic acid, or a metal salt of such a polymer, a fluorine-containing polymer such as polyvinylidene fluoride, an alkane-based polymer such as polyethylene or polypropylene, and any copolymer thereof.

When the coated carbon material of the present embodiment is used in combination with the above binding material having an olefinic unsaturated bond, the ratio of the binding material used in the active material layer can be reduced as compared with conventional one. Specifically, the mass ratio between the coated carbon material of the present embodiment and the binding material (which may be optionally a mixture of the binding material having an unsaturated bond and the binding material having no unsaturated bond, as described above.) is preferably in the range of 90/10 or more, more preferably 95/5 or more, and preferably in the range of 99.9/0.1 or less, more preferably 99.5/0.5 or less, in terms of each dry mass ratio. When the proportion of the binding material is within the above range, a decrease in capacity and an increase in resistance can be suppressed and furthermore strength of an electrode sheet is also excellent.

The negative electrode of the present embodiment can be formed by dispersing the coated carbon material of the present embodiment and the binding material in a dispersion medium to provide a slurry, and coating the current collector with the slurry. An organic solvent such as alcohol, or water can be used as the dispersion medium. A conductive agent may also be optionally further added to the slurry. Examples of the conductive agent include carbon black such as acetylene black, Ketjen black, or furnace black, or a fine powder having an average particle diameter of 1 um or less and including Cu, Ni, or an alloy thereof. The amount of the conductive agent added is preferably about 10% by mass or less relative to the coated carbon material of the present embodiment.

Conventionally known one can be used as the current collector with which the slurry is to be coated. Specific examples include a metal thin film such as rolled copper foil, electrolytic copper foil, or stainless foil. The thickness of the current collector is preferably 4 um or more, more preferably 6 um or more, and preferably 30 um or less, more preferably 20 um or less.

After the current collector is coated with the slurry, an active material layer is formed under a dry air or inert atmosphere at a temperature of preferably 60°C or more, more preferably 80°C or more, and preferably 200°C or less, more preferably 195°C or less.

The thickness of the active material layer obtained by coating with the slurry and drying is preferably 5 $\mu$m or more, more preferably 20 um or more, further preferably 30 $\mu$m or more, and preferably 200 $\mu$m or less, more preferably 100 $\mu$m or less, further preferably 75 $\mu$m or less. When the thickness of the active material layer is within the above range, practical utility of a negative electrode is excellent in terms of balance with the particle diameter of the coated carbon material, and a sufficient function of intercalation/deintercalation of Li, corresponding to a high value of current density, can be obtained.

The density of the coated carbon material in the active material layer differs depending on the application, and is preferably 1.55 g/cm$^3$ or more, more preferably 1.6 g/cm$^3$ or more, further preferably 1.65 g/cm$^3$ or more, particularly preferably 1.7 g/cm$^3$ or more, and preferably 1.9 g/cm$^3$ or less in an application where capacity is emphasized. When the density is within the above range, the capacity per unit volume of a battery can be sufficiently ensured and rate characteristics are also hardly deteriorated.

When the coated carbon material of the present embodiment, described above, is used to produce a negative electrode for a secondary battery, selection of the procedure and other material is not particularly restricted. Also when the negative electrode is used to produce a lithium ion secondary battery, selection of any member necessary for constitution of such a lithium ion secondary battery, such as a positive electrode and an electrolytic solution of such a battery, is not particularly restricted. Hereinafter, the details of the negative electrode for a lithium ion secondary battery and the lithium ion secondary battery, with the coated carbon material of the present embodiment, are exemplified, but any usable material, production method, and the like are not limited to the following specific examples.

<Secondary battery>

The basis configuration of the secondary battery, in particular, the lithium ion secondary battery, of the present embodiment, is the same as that of a conventionally known lithium ion secondary battery, and usually includes a positive electrode and a negative electrode each capable of intercalation/deintercalation a lithium ion, and an electrolyte. The above-mentioned coated carbon material of the present embodiment is used in the negative electrode.

The positive electrode is obtained by forming a positive electrode active material layer containing a positive electrode active material and a binding material, on a current collector.

Examples of the positive electrode active material include a metal chalcogen compound capable of intercalation and deintercalation an alkali metal cation such as a lithium ion, in charge and discharge. Examples of the metal chalcogen compound include a transition metal oxide such as vanadium oxide, molybdenum oxide, manganese oxide, chromium oxide, titanium oxide, or tungsten oxide, a transition metal sulfide such as vanadium sulfide, molybdenum sulfide, titanium sulfide, or CuS, a phosphorus-sulfur compound of a transition metal, such as $NiPS_3$ or $FePS_3$, a selenium compound of a transition metal, such as $VSe_2$ or $NbSe_3$, a composite oxide of a transition metal, such as $Fe_{0.25}V_{0.75}S_2$ or $Na_{0.1}CrS_2$, or a composite sulfide of a transition metal, such as $LiCoS_2$ or $LiNiS_2$.

In particular, for example, $V_2O_5$, $V_5O_{13}$, $VO_2$, $Cr_2O_5$, $MnO_2$, $TiO_2$, $MoV_2O_8$, $LiCoO_2$, $LiNiO_2$, $LiMn_2O_4$, $TiS_2$, $V_2S_5$, $Cr_{0.25}V_{0.75}S_2$, or $Cr_{0.5}V_{0.5}S_2$ is preferable, and $LiCoO_2$, $LiNiO_2$ or $LiMn_2O_4$, or a lithium-transition metal composite oxide where such a transition metal is partially substituted with other metal is particularly preferable. Such a positive electrode active material may be used singly or as a mixture of a plurality thereof.

A known binding material can be arbitrarily selected and used as the binding material for binding the positive electrode active material. Examples include an inorganic compound such as silicate or water glass, or a resin having no unsaturated bond, such as Teflon (registered trademark) or polyvinylidene fluoride. In particular, a resin having no unsaturated bond is preferable. A resin having no unsaturated bond, if used as the resin for binding the positive electrode active material, may be decomposed in oxidation reaction. The weight average molecular weight of such a resin is usually in the range of 10000 or more, preferably 100000 or more, and usually in the range of 3000000 or less, preferably 1000000 or less.

A conductive material for an enhancement in conductivity of the electrode may be contained in the positive electrode active material layer. The conductive material is not particularly restricted as long as a proper amount thereof can be mixed with the active material to thereby impart conductivity, and examples thereof usually include a carbon powder such as acetylene black, carbon black, or graphite, or various metal fibers, powders, or foil.

The positive electrode sheet is formed by forming a slurry of the positive electrode active material and the binding material in a solvent and coating a current collector with the slurry, according to the same procedure as in production of the above-mentioned negative electrode. The current collector of the positive electrode, here used, is, for example, aluminum, nickel, or stainless steel (SUS), but is not limited at all.

The electrolyte here used is, for example, a non-aqueous electrolytic solution where a lithium salt is dissolved in a non-aqueous solvent, or such a non-aqueous electrolytic solution which is formed into a gel, rubber, or a solid sheet by an organic polymer compound or the like.

The non-aqueous solvent used in the non-aqueous electrolytic solution is not particularly limited, and can be appropriately selected from known non-aqueous solvents conventionally proposed as solvents of non-aqueous electrolytic solutions. Examples include a linear carbonate compound such as diethyl carbonate, dimethyl carbonate, or ethyl methyl carbonate; a cyclic carbonate compound such as ethylene carbonate, propylene carbonate, or butylene carbonate; a linear ether compound such as 1,2-dimethoxyethane; a cyclic ether compound such as tetrahydrofuran, 2-methyltetrahydrofuran, sulfolane, or 1,3-dioxolane; a linear ester compound such as methyl formate, methyl acetate, or methyl propionate; or a cyclic ester compound such as $\gamma$-butyrolactone or $\gamma$-valerolactone.

Any one of such non-aqueous solvents may be used singly, or two or more kinds thereof may be used as a mixture. In the case of a mixed solvent, a combination as a mixed solvent containing a cyclic carbonate and a linear carbonate is preferable, and the cyclic carbonate is particularly preferably a mixed solvent of ethylene carbonate and propylene carbonate in that a high ion conductivity can be exhibited even at a low temperature and low-temperature charge impossible characteristics are enhanced. In particular, propylene carbonate in the entire non-aqueous solvent preferably occupies the range of 2% by mass or more and 80% by mass or less, more preferably the range of 5% by mass or more and 70% by mass or less, further preferably the range of 10% by mass or more and 60% by mass or less. If the proportion of propylene carbonate is less than the above, the ion conductivity at a low temperature is lowered, and if the proportion of propylene carbonate is more than the above, a problem is that, when a graphite-based electrode is used, propylene carbonate solvated to a lithium ion is co-inserted between graphite phases to thereby cause degradation of a graphite-based negative electrode active material due to interlayer peeling and provide no sufficient capacity.

The lithium salt used in the non-aqueous electrolytic solution is also not particularly limited, and can be appropriately selected from known lithium salts known to be usable in this application. Examples include halide such as LiCl or LiBr, perhalide such as $LiClO_4$, $LiBrO_4$, or $LiClO_4$, an inorganic fluoride salt such as $LiPF_6$, $LiBF_4$, or $LiAsF_6$, a perfluoroalkanesulfonic acid salt such as $LiCF_3SO_3$ or $LiC_4F_9SO_3$, or a fluorine-containing organic lithium salt such as a perfluoroalkanesulfonic acid imide salt such as Li trifluorosulfoneimide $((CF_3SO_2)_2NLi)$, and in particular, $LiClO_4$, $LiPF_6$, or $LiBF_4$ is preferable.

Such a lithium salt may be used singly or as a mixture of two or more kinds thereof. The concentration of the lithium salt in the non-aqueous electrolytic solution is usually in the range of 0.5 mol/L or more and 2.0 mol/L or less.

When an organic polymer compound is included in the non-aqueous electrolytic solution and formed into a gel, rubber, or a solid sheet and then used, specific examples of the organic polymer compound include a polyether-based polymer compound such as polyethylene oxide or polypropylene oxide; a crosslinked polymer of the polyether-based polymer compound; a vinyl alcohol-based polymer compound such as polyvinyl alcohol or polyvinyl butyral; an insolubilized product of the vinyl alcohol-based polymer compound; polyepichlorohydrin; polyphosphazene; polysiloxane; a vinyl-based polymer compound such as polyvinylpyrrolidone, polyvinylidene carbonate, or polyacrylonitrile; or a polymeric copolymer such as poly($\omega$-methoxyoligooxyethylene methacrylate), poly($\omega$-methoxyoligooxyethylene methacrylate-comethyl methacrylate), or poly(hexafluorpropylene-vinylidene fluoride).

The non-aqueous electrolytic solution may further include a coating film-forming agent. Specific examples of the coating film-forming agent include a carbonate compound such as vinylene carbonate, vinyl ethyl carbonate, or methyl phenyl carbonate; an alkene sulfide such as ethylene sulfide or propylene sulfide; a sultone compound such as 1,3-propanesultone or 1,4-butanesultone; or an acid anhydride such as maleic anhydride or succinic anhydride. An overcharge inhibitor such as diphenyl ether or cyclohexylbenzene may be further added.

When the above additive is used, the content thereof is preferably usually in the range of 10% by mass or less, in particular, 8% by mass or less, furthermore 5% by mass or less, particularly 2% by mass or less. If the content of the above additive is too high, an adverse effect on other battery characteristics, for example, an increase in initial irreversible capacity and/or deterioration in low-temperature characteristics and rate characteristics may be caused.

A polymer solid electrolyte as a conductor of an alkali metal cation such as a lithium ion can also be used as the electrolyte. Examples of the polymer solid electrolyte include one obtained by dissolving a lithium salt in the above-mentioned polyether-based polymer compound, or a polymer where a terminal hydroxyl group of polyether is substituted with an alkoxide.

A porous separator such as a porous film or a nonwoven cloth is usually interposed between the positive electrode and the negative electrode in order to prevent shortage between the electrodes. In this case, the non-aqueous electrolytic solution is used with which the porous separator is impregnated. The material of the separator, here used, is a polyolefin such as polyethylene or polypropylene, or polyether sulfone, and is preferably a polyolefin.

The form of the secondary battery of the present embodiment is not particularly restricted. Examples include a cylinder type where a sheet electrode and the separator are in a spiral state, a cylinder type of an inside-out structure where a pellet electrode and the separator are combined, and a coin type where a pellet electrode and the separator are stacked. The battery can be used which is received in any external case and thus formed into any shape such as a coin type, cylinder type, or square type shape.

The order of assembling the secondary battery of the present embodiment is also not particularly limited, the battery may be assembled according to an appropriate procedure depending on its structure, and, as an example, the battery can be obtained by placing the negative electrode on an external case, providing the electrolytic solution and the separator thereon, further placing the positive electrode so that the positive electrode is opposite to the negative electrode, and swaging the resultant with a gasket or a sealing plate.

EXAMPLES

Next, specific aspects of the present invention will be described with reference to Examples, but the present invention is not limited by these Examples.

Herein, abbreviations in Examples are as follows.

PVOH (A): polyvinyl alcohol with reactive substituent introduced (degree of saponification: 98.0 to 99.0% by mol, viscosity: 24.0 to 30.0 mPa·s (aqueous 4% solution, 20°C))

PVOH (B): polyvinyl alcohol with reactive substituent introduced (degree of saponification: > 98.5% by mol, viscosity: 4.5 to 6.0 mPa·s (aqueous 4% solution, 20°C))

<Production of electrode sheet>

Each coated carbon material of Examples or Comparative Examples described below was used to produce an electrode sheet having an active material layer having an active material layer density of $1.60 \pm 0.03$ g/cm$^3$. Specifically, $20.00 \pm 0.02$ g of the coated carbon material, and $20.00 \pm 0.02$ g (0.200 g in terms of solid content) of an aqueous 1% by mass carboxymethyl cellulose sodium salt (MAC500LC manufactured by NIPPON PAPER INDUSTRIES CO., LTD.) solution and $0.42 \pm 0.02$ g (0.2 g in terms of solid content) of an aqueous styrene/butadiene rubber dispersion (TRD102A manufactured by JSR Corporation) were stirred for 5 minutes and defoamed for 30 seconds, with Awatori Rentaro ARE-310 manufactured by THINKY CORPORATION, to thereby obtain a slurry.

Copper foil having a thickness of 20 um, as a current collector, was coated with the slurry at a width of 5 cm by use of an automatic coater (PI-1210 manufactured by Tester Sangyo Co., Ltd.) and a doctor blade so that the coated carbon material was attached at $10.00 \pm 0.3$ mg/cm$^2$, and the resultant was roll-pressed by use of a roller having a diameter of 20 cm to thereby perform adjustment so that the density of the active material layer was $1.60 \pm 0.03$ g/cm$^3$, to thereby obtain an electrode sheet.

<Production of non-aqueous secondary battery (2032 coin type battery)>

The electrode sheet produced by the above method was punched into a disc shape having a diameter of 12.5 mm, and lithium metal foil was punched into a circular sheet shape having a diameter of 14 mm, to thereby obtain a counter electrode. A separator (made of porous polyethylene film) impregnated with an electrolytic solution where LiPF$_6$ was dissolved in a mixed solvent (volume ratio = 3:7) of ethylene carbonate and ethyl methyl carbonate so as to be at 1 mol/L was disposed between both the electrodes, and each 2032 coin type battery was thus produced.

<Method for measuring initial efficiency>

The non-aqueous secondary battery (2032 coin type battery) produced by the above method was used to measure the initial efficiency in charge and discharge of the battery by the following measurement method.

Such a non-aqueous electrolytic solution secondary battery was left to still stand at 25°C for 24 hours, thereafter the lithium counter electrode was charged to 5 mV at a constant current corresponding to 0.04 C at 25°C and then charged to 0.004 C at a constant voltage of 5 mV and discharged to 1.5 V at a constant current of 0.08 C. This was repeated three times to thereby complete coin battery evaluation. The initial efficiency (%) was determined from (Discharge capacity at first cycle)/(Charge capacity at first cycle) $\times$ 100.

<BET specific surface area (N$_2$-SA) by nitrogen adsorption>

A coated carbon material specimen was preliminarily dried under a nitrogen stream at 100°C for 30 minutes and then cooled to a liquid nitrogen temperature, and subjected to measurement using nitrogen gas with a fully automatic specific surface area measurement apparatus (Macsorb HM Model-1210 manufactured by MOUNTECH Co., Ltd.) according to a BET one-point method.

<BET specific surface area (Tol-SA) by toluene adsorption>

The BET specific surface area was determined by preliminarily drying a coated carbon material specimen under a nitrogen stream at 100°C for 30 minutes and then performing linear regression of a range of $P/P_0$ = 0.05 to 0.18 according to a BET method with toluene gas at 25°C, with an apparatus for measurement of differential heat of adsorption (thermal measurement method surface analyzer CSA-25G and multimicro calorimeter MMC-5111 manufactured by Tokyo Riko Co., Ltd.).

<BET specific surface area ratio>

The ratio (Tol-SA/$N_2$-SA) of the BET specific surface area Tol-SA by toluene adsorption to the BET specific surface area $N_2$-SA by nitrogen adsorption was defined as the BET specific surface area ratio.

<Coating rate of basal plane>

The coating rate of the basal plane was measured with an apparatus for measurement of differential heat of adsorption (thermal measurement method surface analyzer CSA-25G and multimicro calorimeter MMC-5111 manufactured by Tokyo Riko Co., Ltd.), by the following procedure.

First, the carbon material before coating with an organic compound was subjected to simultaneous measurement of an adsorption isotherm and a heat of adsorption with a toluene gas. A carbon material surface having a heat of adsorption of 67 kJ/mol or more and a high affinity with toluene was defined as the basal plane, and the basal plane specific surface area of the carbon material was determined from the cross-sectional area of a toluene molecule and the amount of toluene adsorption to the basal plane.

Next, the coated carbon material coated with an organic compound was also again subjected to simultaneous measurement of an adsorption isotherm and a heat of adsorption with a toluene gas, and the basal plane specific surface area was determined from the amount of toluene adsorption to the basal plane having a heat of adsorption of 67 kJ/mol or more. When a portion of the basal plane of the carbon material as a raw material is coated with an organic compound, the affinity with toluene is decreased to result in a lower heat of adsorption, and thus the coated carbon material coated with an organic compound is decreased in basal plane specific surface area as compared with the carbon material as a raw material.

The coating rate of the basal plane was calculated by the following expression (A).

```
Expression (A)

    Coating rate of basal plane (%) = [1 - (Basal plane

specific surface area of coated carbon material)/(Basal

plane specific surface area of carbon material as raw

material)] × 100
```

<Basal plane specific surface area ratio>

The ratio (basal plane specific surface area/Tol-SA) between the basal plane specific surface area by toluene adsorption and the BET specific surface area Tol-SA by toluene adsorption was defined as the basal plane specific surface area ratio.

<Mass reduction rate>

The mass reduction rate was measured with a TG-DTA measurement apparatus (differential thermogravimetric apparatus STA300 manufactured by Hitachi High-Tech Science Corporation), by the following procedure.

About 50 mg of the coated carbon material was precisely weighed and placed in a specimen container made of alumina, and heated from 25°C to 700°C at a rate of temperature rise of 10°C/min in a nitrogen atmosphere, and the amount of mass reduction according to this, between 200°C and 700°C, was defined as the amount of coating of the coated carbon material.

The mass reduction rate was calculated by the following expression (B).

```
Expression (B)
    Mass reduction rate (%) = [Amount of mass reduction
of coated carbon material/Mass of coated carbon material
before heating] × 100
```

<Peel strength>

The peel strength was measured with a light load type adhesive/coating film peel analyzer (VPA-3S manufactured by Kyowa Interface Science Co., Ltd.), by the following procedure.

In other words, the electrode sheet produced by the above method was dried at 110°C for 24 hours and then cut to a size of 2.5 cm × 7 cm, a negative electrode surface was allowed to face a test sheet and these were attached by a double-sided tape having a width of 2 cm, and the test sheet was installed on the measurement apparatus and an end of such an electrode sheet sheet was attached to a load cell. Peeling was performed at a peeling angle of 90° and a peeling speed of 50 mm/min, and the force necessary for the peeling was measured.

[Example 1]

Granulated and spheronized natural graphite having a $N_2$-SA of 6.3 m$^2$/g and a d50 of 15.9 $\mu$m was used as a carbon material. Such a graphite powder had a pore in a particle, and the pore volume in the range from 10 nm to 1500 nm was 0.14 mL/g, the total pore volume was 0.56 mL/g, and a peak of a pore size distribution was at 360 nm from the results of mercury porosimetry. A mixture of 100 g of this granulated and spheronized natural graphite and 200 g of an aqueous 0.15% solution of PVOH (A) as an organic compound was heated to 125°C with being stirred in a glass container by use of a three-one motor. The mixture was boiled for 5 minutes, and then cooled and stirred at 50°C for 1 hour, and the graphite powder was separated by suction filtration. After drying, sieving treatment was performed and a powdery coated carbon material for a non-aqueous secondary-battery negative-electrode was obtained. The basal plane specific surface area, the Tol-SA, the $N_2$-SA, the BET specific surface area ratio, the coating rate of the basal plane, the basal plane specific surface area ratio, the mass reduction rate, the initial efficiency, and the peel strength of the coated carbon material obtained for a non-aqueous secondary-battery negative-electrode were measured by the measurement methods. The results are shown in Table 1.

[Example 2]

A coated carbon material for a non-aqueous secondary-battery negative-electrode was obtained in the same manner as in Example 1 except that an aqueous 0.2% solution of PVOH (B) was used instead of the aqueous 0.15% solution of PVOH (A) used in Example 1 above. The basal plane specific surface area, the Tol-SA, the $N_2$-SA, the BET specific surface area ratio, the coating rate of the basal plane, the basal plane specific surface area ratio, the mass reduction rate, the initial efficiency, and the peel strength of the coated carbon material obtained for a non-aqueous secondary-battery negative-electrode were measured by the measurement methods. The results are shown in Table 1.

[Example 3]

A coated carbon material for a non-aqueous secondary-battery negative-electrode was obtained in the same manner as in Example 1 except that an aqueous 0.25% solution of PVOH (B) was used instead of the aqueous 0.15% solution of PVOH (A) used in Example 1 above. The basal plane specific surface area, the Tol-SA, the $N_2$-SA, the BET specific surface area ratio, the coating rate of the basal plane, the basal plane specific surface area ratio, the mass reduction rate, the initial efficiency, and the peel strength of the coated carbon material obtained for a non-aqueous secondary-battery negative-electrode were measured by the measurement methods. The results are shown in Table 1.

[Comparative Example 1]

The granulated and spheronized natural graphite having a $N_2$-SA of 6.3 m$^2$/g and a d50 of 15.9 um, used in Example 1, was adopted as a carbon material for a non-aqueous secondary-battery negative-electrode. The basal plane specific surface area, the Tol-SA, the $N_2$-SA, the BET specific surface area ratio, the coating rate of the basal plane, the basal plane specific surface area ratio, the mass reduction rate, the initial efficiency, and the peel strength were measured by the measurement methods. The results are shown in Table 1.

[Comparative Example 2]

A coated carbon material for a non-aqueous secondary-battery negative-electrode was obtained in the same manner as in Example 1 except that an aqueous 0.5% solution of PVOH (B) was used instead of the aqueous 0.15% solution of PVOH (A) used in Example 1 above. The basal plane specific surface area, the Tol-SA, the $N_2$-SA, the BET specific surface area ratio, the coating rate of the basal plane, the basal plane specific surface area ratio, the mass reduction rate, the initial efficiency, and the peel strength of the coated carbon material obtained for a non-aqueous secondary-battery negative-electrode were measured by the measurement methods. The results are shown in Table 1.

Table 1

| | Organic compound for coating | | Basal plane specific surface area by toluene adsorption ($m^2/g$) | Tol-SA ($m^2/g$) | $N_2$-SA ($m^2/g$) | BET specific surface area ratio Tol-SA/$N_2$-SA | Coating rate of basal plane (%) | Basal plane specific surface area ratio Basal plane specific surface area/ TofSA | Mass reduction rate (%) | Initial efficiency (%) | Peel strength (mM/mm) |
|---|---|---|---|---|---|---|---|---|---|---|---|
| | Type | Amount of addition to carbon material(% by mass) | | | | | | | | | |
| Example 1 | PVOH (A) | 0.3 | 2.3 | 4.2 | 5.0 | 0.84 | 47 | 0.56 | 0.23 | 92.4 | 13.0 |
| Example 2 | PVOH (B) | 0.4 | 1.4 | 3.5 | 4.5 | 0.78 | 67 | 0.40 | 0.33 | 92.7 | 19.3 |
| Example 3 | PVOH (B) | 0.5 | 0.9 | 3.3 | 4.3 | 0.77 | 79 | 0.27 | 0.39 | 92.8 | 13.7 |
| Comparative Example 1 | | | 4.3 | 6.3 | 6.3 | 1.00 | 0 | 0.68 | 0.00 | 91.4 | 20.2 |
| Comparative Example 2 | PVOH (B) | 1.0 | 0.3 | 2.7 | 4.0 | 0.68 | 93 | 0.11 | 0.45 | 92.7 | 4.8 |

EP 4 325 595 A1

Each of the coated carbon materials of Examples 1, 2, and 3 could be smaller in specific surface area by a smaller amount of coating than that of Comparative Example 1 where no organic compound coating was applied, and exhibited high initial efficiency by effective suppression of side reaction with an electrolytic solution.

On the other hand, the coated carbon material of Comparative Example 2 where excess organic compound coating was applied to the graphite particle was poor in peel strength of the negative electrode sheet.

INDUSTRIAL APPLICABILITY

The coated carbon material of the present invention can be used as an active material for a secondary-battery negative-electrode, and thus a lithium ion secondary battery can be provided which is excellent in initial efficiency and high in peel strength.

REFERENCE SIGNS LIST

1    carbon material

2    coating material

**Claims**

1.  A coated carbon material where a carbon material is coated with an organic compound, wherein a ratio Tol-SA/$N_2$-SA of a BET specific surface area Tol-SA by toluene adsorption to a BET specific surface area $N_2$-SA by nitrogen adsorption is 0.70 to 0.95.

2.  A coated carbon material where a carbon material is coated with an organic compound, wherein a coating rate of a basal plane of the carbon material is 30% to 90%.

3.  A coated carbon material where a carbon material is coated with an organic compound, wherein a ratio, basal plane specific surface area/Tol-SA, of a basal plane specific surface area by toluene adsorption to a BET specific surface area Tol-SA by toluene adsorption is 0.15 to 0.65.

4.  A coated carbon material where a carbon material is coated with an organic compound, wherein a mass reduction rate from 200°C to 700°C, as measured by TG-DTA, is 0.10% by mass to 0.42% by mass.

5.  The coated carbon material according to any one of claims 1 to 4, wherein the carbon material is graphite.

6.  The coated carbon material according to any one of claims 1 to 5, wherein the carbon material contains pores.

7.  The coated carbon material according to any one of claims 1 to 6, wherein the organic compound comprises a polyvinyl alcohol resin-derived compound.

8.  The coated carbon material according to claim 7, wherein the polyvinyl alcohol resin-derived compound contains a reactive substituent.

9.  The coated carbon material according to claim 8, wherein the reactive substituent contains at least one substituent selected from a hydroxyl group, a carboxyl group, a carbonyl group, an acetyl group, a (meth)acrylic group, an epoxy group, a vinyl group, a hydrolyzable silyl group, a silanol group and a hydrosilyl group.

10. A negative electrode comprising a current collector and an active material layer formed on the current collector, wherein the active material layer comprises the coated carbon material according to any one of claims 1 to 9.

11. A secondary battery comprising a positive electrode, a negative electrode and an electrolyte, wherein the negative electrode is the negative electrode according to claim 10.

FIG. 1

COATING RATE COATING RATE COATING RATE
IN POLE 50%   IN POLE 90%   IN POLE 100%

PATTERN A    PATTERN B    PATTERN C    PATTERN D    PATTERN E

# FIG. 2

FIG. 3

## INTERNATIONAL SEARCH REPORT

International application No.

**PCT/JP2022/015436**

| A. | CLASSIFICATION OF SUBJECT MATTER |
|---|---|

*H01M 4/133*(2010.01)i; *H01M 4/36*(2006.01)i; *H01M 4/587*(2010.01)i
FI: H01M4/587; H01M4/36 C; H01M4/133

According to International Patent Classification (IPC) or to both national classification and IPC

| B. | FIELDS SEARCHED |
|---|---|

Minimum documentation searched (classification system followed by classification symbols)

H01M4/133; H01M4/36; H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2011-198710 A (MITSUBISHI CHEMICALS CORP.) 06 October 2011 (2011-10-06) claims, paragraphs [0013]-[0020], [0031]-[0036], [0049]-[0050], example 5 | 1-11 |
| A | JP 2018-97935 A (TOYOTA CENTRAL R&D LABS., INC.) 21 June 2018 (2018-06-21) | 1-11 |
| A | JP 2013-225501 A (MITSUBISHI CHEMICALS CORP.) 31 October 2013 (2013-10-31) | 1-11 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/015436**

| Patent document cited in search report | | | Publication date (day/month/year) | Patent family member(s) | Publication date (day/month/year) |
|---|---|---|---|---|---|
| JP | 2011-198710 | A | 06 October 2011 | (Family: none) | |
| JP | 2018-97935 | A | 21 June 2018 | (Family: none) | |
| JP | 2013-225501 | A | 31 October 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H2000340232 A
- JP H11120992 A
- JP 2011198710 A
- JP 2019087443 A